(19) Europäisches Patentamt / European Patent Office / Office européen des brevets

(11) **EP 1 659 718 B1**

(12) **EUROPÄISCHE PATENTSCHRIFT**

(45) Veröffentlichungstag und Bekanntmachung des Hinweises auf die Patenterteilung:
**02.01.2008 Patentblatt 2008/01**

(51) Int Cl.:
*H04J 3/06* (2006.01)          *H04L 12/423* (2006.01)

(21) Anmeldenummer: **05022973.1**

(22) Anmeldetag: **21.10.2005**

(54) **Synchronisatonsverfahren und Steuerungssystem für die Synchronisation von Nebeneinheiten, sowie synchronisierbare Nebeneinheiten**

Method for synchronising, control system for synchronising secondary units and synchronisable secondary units

Procédé de synchronisation, système de régulation pour la synchronisation d'unités secondaires et unités secondaires synchronisables

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.11.2004 DE 102004055975**

(43) Veröffentlichungstag der Anmeldung:
**24.05.2006 Patentblatt 2006/21**

(73) Patentinhaber: **Bosch Rexroth AG**
**70184 Stuttgart (DE)**

(72) Erfinder:
• **Kynast, Rigobert**
**97816 Lohr am Main (DE)**
• **Schneider, Bernard**
**1042 Assens (CH)**

(56) Entgegenhaltungen:
DE-A1- 10 253 534          DE-A1- 19 917 354
US-A- 4 926 446          US-A1- 2002 110 155

• **PATENT ABSTRACTS OF JAPAN Bd. 010, Nr. 145 (E-407), 28. Mai 1986 (1986-05-28) & JP 61 006954 A (FUJITSU KK), 13. Januar 1986 (1986-01-13)**

**Beschreibung**

Die Erfindung betrifft ein Verfahren zur sowie ein Steuerungssystem für die zeitliche Synchronisation mehrerer Nebeneinheiten, die über ein Kommunikationssystem von einer Haupteinheit gesteuert werden. Insbesondere betrifft die Erfindung ein Verfahren sowie ein Steuerungssystem, das an mehreren Nebeneinheiten Synchronisationssignale zeitsynchronisiert ausgibt. Schließlich betrifft die Erfindung eine zeitsynchronisierbare Nebeneinheit.

Stand der Technik

Zur Steuerung technischer Prozesse und Anlagen, zum Beispiel von Offsetdruckanlagen und Werkzeugmaschinen ist es oftmals erforderlich eine Vielzahl von Einzelsystemen zeitlich synchron zu steuern bzw. anzutreiben. In einer Druckanlage müssen Beispielsweise die Achsen einzelner Druckstationen zeitlich sehr präzise gesteuert werden, um ein einwandfreies Druckbild des Druckerzeugnisses zu gewährleisten. Bei einer Werkzeugmaschine ist es erforderlich einzelne Achsen mit hoher zeitlicher Präzision aufeinander abgestimmt anzusteuern.

Die Steuerung solcher komplexen Industrieanlagen wird zumeist durch eine dezentrale verteilte Steuerung implementiert. Auf diese Weise können durch den Einsatz modularer Steuerelektronik eine Vielzahl verschiedenartiger Steuersysteme aus wenigen Grundkomponenten zusammengesetzt werden. Typischerweise werden modulare Streuer- und Regelkreise für einzelne Komponenten der Anlage eingesetzt. Diese Steuer- und Regelkreise sind mit einem Feldbus untereinander verbunden, der den wechselseitigen Datenaustausch und die Anbindung an einen Leitstand ermöglicht.

Um ein zeitlich präzises Zusammenspiel der einzelnen Anlagenkomponenten zu gewährleisten ist es nötig, eine gemeinsame Zeitbasis in allen Steuer- und Regelkreise zur Verfügung zu stellen. Nur so kann die erforderliche Koordination zwischen den einzelnen dezentralen Steuerkreisen gewährleistet werden.

Bei einer Druckmaschinensteuerung ist es z. B. üblich einzelnen Antrieben Synchronisationssignale zuzuführen, die einem virtuellen Achsensignal entsprechen. In Analogie zu einem mechanischen Antrieb erzeugt eine Hauptsteuereinheit ein Signal, dass einer virtuellen Längswelle entspricht. Nebeneinheiten erzeugen von dem Längswellensignal ausgehend jeweils ein virtuelles Stehwellensignal.

Aus der Druckschrift DE-A-199 17 354 ist ein Synchronisationsverfahren für die Synchronisation einer Haupteinheit mit Nebeneinheiten bekannt. Die Haupteinheit und die Nebeneinheiten enthalten jeweils eigene Zeitgeber. Die Zeitgeber der Nebeneinheiten werden in regelmäßigen Abständen mit dem Zeitgeber der Haupteinheit synchronisiert, um Abweichungen zwischen den Zeitgebern zu minimieren. Dazu übermittelt die Haupteinheit einer Nebeneinheit über zwei ringförmige Kommunikationswege Signale, die die Sendezeit enthalten. Diese Zeitsignale benötigen verschiedene Laufzeiten zu der Nebeneinheit. Die Nebeneinheit misst die Differenz der Signallaufzeiten und bekommt von der Haupteinheit eine Umlaufzeit für den Signaldurchlauf durch einen der ringförmigen Kommunikationswege mitgeteilt. Daraus errechnet die Nebeneinheit die Laufzeit der Zeitsignale von der Haupteinheit über den jeweiligen Kommunikationsweg. Die von der Haupteinheit gesendete Zeitinformation wird mit der errechneten Laufzeit korrigiert, um eine erwartete Empfangszeit zu bestimmen. Nach dem Vergleich der erwarteten Empfangszeit und der von der Nebeneinheit gemessenen Empfangszeit kann der Zeitgeber der Nebeneinheit korrigiert werden.

Nachteilig an diesem herkömmlichen Verfahren ist, dass nach der Ermittlung der Laufzeitdifferenz jede Nebeneinheit die individuelle Signallaufzeit der einzelnen Kommunikationswege erst noch berechnen muss. Zusätzlich muss jede Nebeneinheit zusätzlich feststellen, auf welchem Signalweg das Zeitsignal zuerst eintrifft, um eine korrekte Berechnung der Laufzeiten zu gewährleisten. Außerdem beruht das in dieser Druckschrift vorgeschlagene Verfahren darauf, dass jede Nebeneinheit und die Haupteinheit einen individuellen Zeitgeber besitzen. Aufgrund der begrenzten Ganggenauigkeit von solchen Zeitgebern kommt es in kurzer Zeit zu einer Abweichung der einzelnen Zeitgeber untereinander, die im Vergleich mit der benötigten Zeitpräzision erheblich sein kann. So muss trotz der Verwendung individueller Zeitgeber eine häufiger Nachsynchronisation der einzelnen Einheiten durchgeführt werden.

Für die zyklische Zeitsynchronisation einzelner Zeitgeber wird häufig auch der IEEE1588 Standard, der den Titel "Precision Clock Synchronization Protocol for Networked Measurement and Control Systems" trägt - kurz PTP - , verwendet. Dieser Standard definiert ein Verfahren, um viele räumlich verteilte Echtzeituhren zu synchronisieren, die über ein Netzwerk, wie das Ethernet, verbunden sind. Gemäß PTP etabliert sich ein Teilnehmer als Master-Uhr und sendet ein erstes Sync-Telegram und nachfolgend ein Follow Up-Telegram mit der Angabe des genauen Zeitpunktes des ersten Telegrams an die übrigen Teilnehmer (Slaves). Der empfangende Teilnehmer kann auf der Basis des ersten Telegrams, des Follow up-Telegrams und seiner Uhr die Zeitdifferenz zwischen seiner Uhr und der Master-Uhr berechnen und somit eine Uhren-Synchronisation durchführen.

Ein Maschinensteuersystem ist in der US-Veröffentlichung US 2002/0110155 beschrieben. Die Maschinensteuerung besteht aus einer zentralen Steuereinheit und einer Vielzahl von Nebenknoten, die jeweils einen Aktuator steuern. Jeder Knoten speichert einen Verzögerungsparameter für Signale von der zentralen Steuereinheit. Der jeweilige Verzögerungsparameter hängt von der Signallaufzeit zwischen der zentralen Steuereinheit und dem Knoten ab. Die zentrale Steuereinheit sendet Zeitnachrichten, die in Zusammenwirken mit den Verzögerungsparametern eine zeitgleiche Durchführung von Steuerkommandos in den Knoten bewirken. Um die Signallaufzeit von der zentralen Steuereinheit zu jedem Knoten zu ermitteln, sendet die Steuereinheit ein Datentelegramm zu jedem Knoten, welches dieser zurücksendet. Aus der Zeitdauer bis zur Signalrückkehr ermittelt die zentrale Steuereinheit die Laufzeitverzögerungen des Signals bis zu dem Knoten und teilt diese dem Knoten mit.

Nachteilig an diesem Verfahren ist, dass eine umfangreiche Initialisierungsphase erforderlich ist, in der die zentrale Steuerungseinheit die Signallaufzeit zu jedem Knoten bestimmt und diese den einzelnen Knoten mitteilt.

Es ist die Aufgabe der vorliegenden Erfindung eine verbesserte Zeitsynchronisation von Steuereinheiten anzugeben, so dass insbesondere auf möglichst einfache und effiziente Weise ein gemeinsames Zeitsystem in verschiedenen räumlich getrennten Steuereinheiten zur Verfügung steht.

Diese Aufgabe wird erfindungsgemäß durch die Merkmale des Anspruchs 1 für ein Synchronisationsverfahren, die Merkmale des Anspruchs 20 für ein Steuerungssystem und die Merkmale des Anspruchs 39 für eine Nebeneinheit gelöst.

Weiter vorteilhafte Ausgestaltungen der Erfindung sind Gegenstand der Unteransprüche.

Gemäß einem ersten Aspekt der vorliegenden Erfindung wird ein Synchronisationsverfahren für die zeitliche Synchronisation mindestens zweier Nebeneinheiten angegeben. Die Nebeneinheiten werden durch eine Haupteinheit gesteuert, wobei zwei Signalstränge vorgesehen sind, die jeweils jede Nebeneinheit in zueinander gegensinniger Reihenfolge genau einmal durchlaufen. Außerdem sind die Signalstränge so konfiguriert, dass ein von der Haupteinheit gesendetes Signal auf zumindest einem der Signalstränge alle Nebeneinheiten durchläuft und zur Haupteinheit zurückkehrt. Das Verfahren umfasst die Schritte des Bestimmens der Signaldurchlaufzeit, die ein von der Haupteinheit gesendetes Signal bis zur Rückkehr benötigt und des Mitteilens der Signaldurchlaufzeit an alle Nebeneinheiten. Weiter sendet die Haupteinheit zumindest ein Steuersignal an alle Nebeneinheiten als Referenzsignal, so dass jede Nebeneinheit über beide Signalstränge das zumindest eine Steuersignal empfängt. Jede Nebeneinheit führt die folgenden Schritte aus. Eine erste Zeitzählung wird bei Empfang des zumindest einen Steuersignals über den ersten Signalstrang gestartet und eine zweite Zeitzählung bei Empfang des zumindest einen Steuersignals über den zweiten Signalstrang. Die zwei Zeitzählungsstände werden addiert und mit der mitgeteilten Signaldurchlaufzeit verglichen. Die Zeitzählungsstände werden ausgelesen sobald die addierten Zeitzählungsstände der mitgeteilten Signaldurchlaufzeit entsprechen. Für jede Nebeneinheit wird bezüglich jedes Signalstranges ein Zeitkorrekturparameter auf der Grundlage der ausgelesenen Zeitzählungsstände bestimmt. Die Nebeneinheiten synchronisieren sich unter Berücksichtigung der Zeitkorrekturparameter.

Gemäß einem zweiten Aspekt der Erfindung wird ein Steuerungssystem nach Anspruch 20 angegeben.

Gemäß einem dritten Aspekt der Erfindung ist eine zeitsynchronisierbare Nebeneinheit vorgesehen. Die Nebeneinheit wird ihrerseits von einer Haupteinheit gesteuert und von zwei Signalsträngen durchlaufen. Die Nebeneinheit empfängt eine von der Haupteinheit mitgeteilte Signaldurchlaufzeit. Des Weiteren empfängt die Nebeneinheit ein Referenzsignal über beide Signalstränge, das die Haupteinheit in Form von zumindest einem Steuersignal an die Nebeneinheit sendet. Die Nebeneinheit ist mit einem ersten Zeitzähler, der eine erste Zeit seit dem Empfang des Referenzsignals über den ersten Signalstrang zählt, und einem zweiten Zeitzähler, der eine zweite Zeit seit dem Empfang Referenzsignals über den zweiten Signalstrang zählt, ausgestattet. Außerdem weist die Nebeneinheit eine Steuereinrichtung mit einer Addiereinrichtung zum Addieren der zwei Zeitzählerstände, einer Vergleichseinrichtung zum Vergleichen der addierten Zeitzählerstände mit der mitgeteilten Signaldurchlaufzeit, und einer Einrichtung zum Auslesen der Zeitzählerstände sobald die addierten Zeitzählerstände der mitgeteilten Signaldurchlaufzeit entsprechen, auf. Für jeden Signalstrang wird jeweils ein Zeitkorrekturparameter auf der Grundlage wenigstens eines der ausgelesenen Zählerstände bestimmt. Die Nebeneinheit führt unter Berücksichtigung der Zeitkorrekturparameter eine Zeitsynchronisation aus.

Die vorliegende Erfindung zeichnet sich dadurch aus, dass in jeder Nebeneinheit zwei Zeitzählungen, vorzugsweise von zwei Zeitzählern vorgenommen werden. Im Folgenden wird wegen der sprachlichen Vereinfachung zumeist von Zeitzählern gesprochen. Die Zeitzählungen werden durch Empfang eines Referenzsignals von der Haupteinheit aktiviert. Die erste Zeitzählung bestimmt die Zeit seit dem Empfang des Referenzsignals über den ersten Signalstrang und die zweite Zeitzählung die Zeit seit dem Empfang des Referenzsignals über den zweiten Signalstrang. Die Zählerstände werden ausgelesen sobald die Summe der Zählerstände die zuvor mitgeteilte Signaldurchlaufzeit erreicht.

In vorteilhafter Weise gibt die vorliegende Erfindung somit eine einfache und automatische Ermittlung von absoluten Zeitmesswerten an, die eine definierte Zuordnung zu je einem der Signalstränge besitzen. Diese Vorgehensweise der Ermittlung individueller, den Signalsträngen zugeordneter Zeitmesswerte ermöglicht erst die praktisch automatische und unmittelbare Übernahme von Zeitmesswerten als Korrekturparameter einer Zeitsynchronisation.

Ein weiterer Vorteil der vorliegenden Erfindung ist die effiziente Ermittlung dieser Zeitmesswerte durch eine weitgehend parallel ausgeführte Berechnung. Insbesondere werden in jeder Nebeneinheit zwei individuelle Zeitmesswerte für die Signalstränge gleichzeitig generiert. Außerdem können in vorteilhafter Weise alle Nebeneinheiten die Ermittlung der Zeitmesswerte parallel und unabhängig voneinander ausführen. Dadurch wird eine inhärente Redundanz und die parallel ausgeprägte Struktur eines dezentralen Steuerungssystems optimal ausgenutzt. Des Weiteren stehen gleichzeitig in allen Nebeneinheiten Zeitmesswerte zur Verfügung, die sofort für eine Zeitsynchronisation verwendbar sind.

Als zusätzlicher Vorteil ist zu nennen, dass die Bestimmung der Zeitmesswerte nur ein sehr geringes Datentransfervolumen zwischen der Haupteinheit und den Nebeneinheiten verursacht. Insbesondere wird die Bestimmung der Zeitmesswerte durch höchstens ein Referenzsignal je Signalstrang ausgelöst. Zur Durchführung der Bestimmung ist kein weiterer Datenaustausch erforderlich. Die Signaldurchlaufzeit kann von der Haupteinheit einmalig vorab mitgeteilt werden und braucht nur bei einer Änderung der Systemtopologie aktualisiert werden.

Im Gegensatz zu herkömmlichen Verfahren bei denen eine Zeitdifferenz zwischen dem Eintreffen zweier Zeitsignale bestimmt wird, ist gemäß der vorliegenden Erfindung die Kenntnis oder Ermittlung einer solchen Zeitdifferenz zu keinem Zeitpunkt erforderlich. Solche herkömmlichen Verfahren führen im Anschluss an die Ermittlung der Zeitdifferenz außerdem weitere Rechenschritte durch, die zusätzliche Messwerte erfordern - nämlich die Information an welcher Signalstrecke ein Zeitsignal zuerst eintrifft und der Wert der Signalumlaufzeit im Gesamtsystem. Dagegen können gemäß der vorliegenden Erfindung die ermittelten Zeitmesswerte ohne Berücksichtigung weiterer Parameter zur Zeitsynchronisation verwendet werden.

Die erfindungsgemäße Bestimmung der Zeitkorrekturparameter eignet sich sowohl für die Initialisierung des Steuerungssystems als auch für eine kontinuierliche bzw. sporadische oder regelmäßig durchgeführte Rekonfiguration bzw. Zeitabstimmung.

Gemäß einem weiteren Aspekt der vorliegenden Erfindung ist ein Synchronisationsverfahren nach Anspruch 47 vorgesehen. Demzufolge ermitteln die Nebeneinheiten den Zeitpunkt, an dem die addierten Zeitzählungsstände der mitgeteilten Signaldurchlaufzeit entsprechen und synchronisieren sich auf der Grundlage des ermittelten Zeitpunktes. So ist zum Beispiel eine nachfolgende Bestimmung von Zeitkorrekturparametern nicht zwingend erforderlich, um die Zeitsynchronisation der Nebeneinheiten durchzuführen. In vorteilhafter Weise ist somit ein sehr effizientes, automatisiertes Verfahren für die Zeitsynchronisation angegeben. Vorzugsweise entspricht der ermittelte Zeitpunkt einem für alle Nebeneinheiten identischen Zeitpunkt, so dass eine gemeinsame Zeitbasis definiert ist.

Vorzugsweise sendet die Haupteinheit den Nebeneinheiten ein Steuersignal, das als Auslösesignal zur Erzeugung der Synchronisationssignale dient. Somit wird die zeitsynchronisierte Ausgabe von Synchronisationssignalen auf effiziente Weise zentral gesteuert.

Gemäß einer Ausführungsform der vorliegenden Erfindung entspricht der seitens der Nebeneinheit einem der Signalstränge zugeordnete Zeitkorrekturparameter einer individuellen Wartezeit, und bei Empfang eines Auslösesignals über diesen Signalstrang gibt die Nebeneinheit das Synchronisationssignal nach Ablauf der Wartezeit aus. Auf diese Weise ist eine besonders einfache, jedoch sehr genaue Erzeugung von zeitsynchronen Synchronisationssignalen in den Nebeneinheiten realisierbar. Im Gegensatz zum Stand der Technik ist es jedoch nicht nötig interne Uhren jeder Nebeneinheit miteinander abzugleichen.

Insbesondere ist nach Empfang eines Steuersignals und Ablauf der Wartezeit ein für alle Nebeneinheiten simultan auftretender Zeitpunkt hergestellt. Somit wird mit wenig Aufwand eine gemeinsame Zeitbasis in allen Nebeneinheiten angegeben. Auf der Grundlage dieser Zeitbasis können zeitlich hochgenaue und synchrone Steuerungsaufgaben durchgeführt werden.

Vorzugsweise führt jede Nebeneinheit die Bestimmung je eines Zeitkorrekturparameters für jeden Signalstrang durch. Somit werden die Zeitkorrekturparameter unmittelbar von jeder Nebeneinheit selbst bestimmt. Alternativ können die Zeitkorrekturparameter für jede Nebeneinheit aber auch von der Haupteinheit bestimmt werden. Dazu ist es ggf. nötig, dass die Haupteinheit die ausgelesenen Zeitzählerstände von der jeweiligen Nebeneinheit abfragt.

In einer erfindungsgemäßen Ausführungsform sind die zwei Signalsträngen so konfiguriert, dass die Nebeneinheiten von der Haupteinheit ausgehend seriell miteinander verbunden sind, und die aus Sicht der Haupteinheit letzte Nebeneinheit Signale von dem einen Signalstrang in den anderen Signalstrang überträgt. Eine solche Konfiguration der Signalsträngen ermöglicht die automatische Ermittlung der Zeitkorrekturparametern in den angeschlossenen Nebeneinheiten, so dass die zeitsynchrone Ausgabe von Synchronisationssignalen auf effiziente Weise, ohne eine manuelle Konfiguration bei der Systeminstallation, sichergestellt ist. Diese Topologie bietet sich für Anwendungen an, bei denen sehr weite Signalwege zwischen den Teilnehmern bestehen, und die bei Ausfall der Signalübermittlung nicht in einen sicherheitskritischen Zustand geraten.

Gemäß einer anderen Ausführungsform bilden die zwei Signalsträngen jeweils zwei ringförmige von der Haupteinheit ausgehende und zu dieser zurückkehrende Signalwege. Diese Topologie ermöglicht ebenfalls die automatische Ermittlung der Zeitkorrekturparametern in den angeschlossenen Nebeneinheiten, so dass eine hohe zeitliche Präzision der von den Nebeneinheiten ausgegebenen Synchronisationssignalen auf effiziente Weise sichergestellt ist. Des Weiteren eignet sich diese Topologie für sicherheitsrelevante Steuerungsaufgaben, da durch die zwei unabhängigen Signalwege eine Redundanz bei der Signalübermittlung besteht.

Vorzugsweise bestimmt die Haupteinheit die Signaldurchlaufzeit für jeden der ringförmigen Signalwege. Zum Einen kann dadurch eine Unsymmetrie in den Signalwegen erkannt werden, und entsprechend eine Benutzermeldung erzeugt werden oder gegebenenfalls eine entsprechende Konfiguration der Nebeneinheiten vorgenommen werden. Zum Anderen kann der Ausfall eines Signalweges festgestellt und dem Benutzer signalisiert werden.

Wird die oben beschriebene Topologie mit zwei ringförmigen Signalwegen verwendet, ist es zweckmäßig, dass die Haupteinheit jeweils ein Steuersignal gleichzeitig an beide Signalwege sendet. Auf diese Weise vereinfacht sich die Ermittlung der Zeitkorrekturparameter in den Nebeneinheiten, da für die Berechnung kein Sendezeitversatz berücksichtigt werden muss. Prinzipiell kann die Berechnung jedoch auch unter Berücksichtigung eines bekannten Zeitversatzes durchgeführt werden.

Vorzugsweise ist die Signaldurchlaufzeit der ringförmigen Signalwege jeweils gleich.

Bei Verwendung der oben genannten linienförmigen Topologie entspricht vorzugsweise die Signallaufzeit von der Haupteinheit zur letzten Nebeneinheit auf dem einen Signalstrang der Signallaufzeit von der letzten Nebeneinheit zur Haupteinheit auf dem anderen Signalstrang.

Bei den beiden letztgenannten Topologien ergibt sich in einer solchen symmetrischen Anordnung der Nebeneinheiten und Signalstränge eine besonders einfache Interpretation der ausgelesenen Zeitzählerstände und demzufolge eine einfache Ermittlung der Zeitkorrekturparameter.

Vorzugsweise entspricht der seitens der Nebeneinheit für einen Signalstrang bestimmte Zeitkorrekturparameter einem Maß für die Signallaufzeit von der Haupteinheit zu dieser Nebeneinheit auf dem anderen Signalstrang.

Gemäß einer weiteren vorteilhaften Ausführungsform speichert jede Nebeneinheit den ausgelesenen Stand des ersten Zeitzählers als Zeitkorrekturparameter für den ersten Signalstrang und den ausgelesenen Stand des zweiten Zeitzählers als Zeitkorrekturparameter für den zweiten Signalstrang ab.

Vorzugsweise erfolgt die Ausgabe der Synchronisationssignale zeitgleich mit der Rückkehr des Auslösesignals bei der Haupteinheit. Somit erhält die Haupteinheit eine Rückmeldung über den Zeitpunkt, zu dem die Synchronisationssignale ausgegeben werden. In gleicher Weise kann die Rückkehr eines Steuersignals bei der Haupteinheit einem für jede Nebeneinheit identisch ermittelten Zeitpunkt entsprechen.

Gemäß einer weiteren Ausführungsform kann die Signaldurchlaufzeit der ringförmigen Signalwege auch unterschiedlich sein. Dadurch ist der erfindungsgemäße automatische Abgleich der Nebeneinheiten auch für Topologien anwendbar, die hinsichtlich der Signalstränge asymmetrisch aufgebaut sind.

In einem solchen Fall erfolgt vorzugsweise die Ausgabe der Synchronisationssignale zeitgleich mit der Rückkehr des Auslösesignals, das die längere Signaldurchlaufzeit für die Rückkehr zur Haupteinheit benötigt. Somit ist sichergestellt, dass alle Nebeneinheiten rechtzeitig angesteuert werden, um zeitsynchrone Synchronisationssignale zu erzeugen und auszugeben. In gleicher Weise kann die Rückkehr eines Steuersignals auf dem längeren Signalstrang einem für jede Nebeneinheit identisch ermittelten Zeitpunkt entsprechen.

Gemäß einer weiteren Ausführungsform ist vorgesehen, dass die Haupteinheit eine Signaldurchlaufzeit mitteilt, die größer ist als die ermittelte Signaldurchlaufzeit. Somit kann eine zusätzliche Signalverarbeitungszeit in den Nebeneinheiten berücksichtigt werden. Außerdem ist ein solcher Zeitpuffer bei der späteren Erweiterung des Systems vorteilhaft.

Vorzugsweise entspricht die mitgeteilte Signaldurchlaufzeit einer Signaldurchlaufzeit, die sich durch das zusätzlichen Einfügen einer vorgegebenen Zahl an Nebeneinheiten in die Signalwege ergibt. Auf diese Weise kann das Einfügen weiterer Nebeneinheiten schon vorher berücksichtigt werden. Außerdem können auf diese Weise Nebeneinheiten selbst im laufenden Betrieb nachträglich in das Steuerungssystem eingefügt werden, ohne dass es zu einer Änderung im zeitlichen Ablauf der Synchronisationssignalerzeugung kommt.

Erfindungsgemäß werden vorzugsweise das Addieren der Zeitzählerstände und das Vergleichen der addierten Zeitzählerstände mit der mitgeteilten Signaldurchlaufzeit jeweils fortlaufend ausgeführt. Somit stehen unmittelbar nach Auslesen der Zeitzählerstände Parameter zur Verfügung, nämlich die Zeitzählerstände, die eine zeitsynchrone dezentrale Erzeugung der Synchronisationssignale ermöglichen.

Figurenbeschreibung

Nachfolgend wird die vorliegende Erfindung und deren Vorteile unter Bezugnahme auf die in den Figuren dargestellten Ausführungsbeispiele näher erläutert.

Es zeigen:

Fig. 1      ein erfindungsgemäßes Steuerungssystem mit mehreren Nebeneinheiten am Beispiel einer ringförmigen Topologie,

Fig. 2      ein erfindungsgemäßes Steuerungssystem mit mehreren Nebeneinheiten am Beispiel einer linienförmigen Topologie,

Fig. 3A      eine Haupteinheit, die sich zur Steuerung des in Fig. 1 dargestellten Steuerungssystems eignet,

Fig. 3B      eine Haupteinheit, die sich zur Steuerung des in Fig. 2 dargestellten Steuerungssystems eignet,

Fig. 4    eine erfindungsgemäße Nebeneinheit mit Anschlüssen für zwei Signalstränge und zwei den jeweiligen Signalsträngen zugeordneten Zeitzählern,

Fig. 5A    eine weitere Ausführungsform eines erfindungsgemäßen Steuerungssystems, bei dem jeweils ringförmige Signalwege in Kaskade untereinander angeordnet sind, und

Fig. 5B    ein Ausschnitt eines erfindungsgemäßen Steuerungssystems gemäß einer weiteren Ausführungsform, bei der von einer Nebeneinheit zwei weitere Signalstränge linienförmig abzweigen.

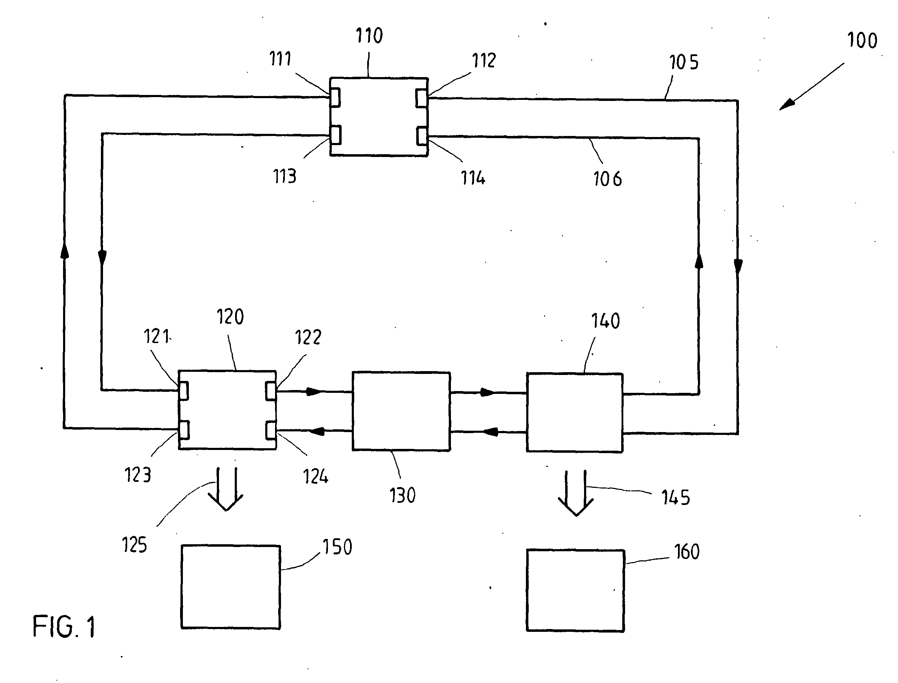

Die Figur 1 zeigt in schematischer Form den Aufbau des erfindungsgemäßen Steuerungssystem in einer ersten Ausführungsform. Das gezeigte Steuerungssystem weist eine Haupteinheit 110 auf, die dazu ausgebildet ist mehrere Nebeneinheiten 120, 130 und 140 zu steuern. In der Figur 1 sind drei solcher Nebeneinheiten dargestellt. Das erfindungsgemäße Steuerungssystem weist mindestens zwei Nebeneinheiten auf, kann jedoch auch eine deutlich größere Zahl an Nebeneinheiten umfassen.

Die Nebeneinheiten erzeugen Synchronisationssignale oder zeitlich hochpräzise Steuersignale 125, 145 um Anlagenkomponenten einer gesteuerten Anlage, hier durch die Bezugszeichen 150 und 160 schematisch dargestellt, auf Grundlage einer gemeinsamen Zeitbasis zu betreiben. Handelt es sich bei der gesteuerten Anlage beispielsweise um eine Druckmaschine, so handelt es sich typischerweise bei den Untereinheiten 150 und 160 um einzelne Druckstationen mit entsprechenden Antrieben und Steuereinheiten.

Die Haupteinheit 110 und die Nebeneinheiten 120, 130 und 140 sind untereinander durch zwei ringförmig Signalstränge 105, 106 verbunden. Hinsichtlich der Signals richtung durchlaufen diese Signalstränge die Nebeneinheiten in zueinander gegensinniger Reihenfolge jeweils genau einmal.

Jede Nebeneinheit empfängt Daten auf einem Signalweg 105, 106 und gibt Daten, die nicht für sie bestimmt sind, auf diesem Signalweg an die nächste Nebeneinheit weiter. Vorzugsweise werden aber auch Daten, die an die Nebeneinheit adressiert sind, an die nächsten Nebeneinheiten weitergegeben, um zur Haupteinheit zurückzukehren. Die vorliegende Erfindung ist im Folgenden für ein System beschrieben, bei dem Daten in Form adressierter Datenpakete, sogenannter Datentelegramme, ausgetauscht werden. Die vorliegende Erfindung ist aber auch für andere Systeme anwendbar, die z.B. über eine einfache Datenweitergabe von Einheit zu Einheit eine Kommunikation realisieren.

In dieser Ausführungsform und in den folgenden Ausführungsformen ist davon auszugehen, dass die Datentelegramme immer mit der gleichen Laufzeit von einer Haupteinheit oder Nebeneinheit zu der benachbarten Einheit weitergegeben werden. Somit ist die Laufzeit eines Datentelegramms durch das Gesamtsystem, also die Zeitdauer vom Senden von der Haupteinheit 110 bis zur Rückkehr bei der Haupteinheit 110 auf dem gleichen Signalweg identisch reproduzierbar.

In der in Fig. 1 gezeigten Ausführungsform weist die Haupteinheit und jede Nebeneinheit jeweils vier Anschlüsse auf. Jeweils zwei Anschlüsse, ein Empfangsanschluss und ein Sendeanschluss, bilden einen Port mit dem die jeweilige Einheit an einen der Kommunikationsstränge angeschlossen ist.

Die Haupteinheit umfasst einen Sendeanschluss 112 und einen Empfangsanschluss 111 (Tx / Rx) um Daten auf dem Signalstrang 105 an die benachbarte Nebeneinheit 140 zu senden bzw. von der gegenüberliegend benachbarten Nebeneinheit 120 zu empfangen.

Hinsichtlich des zweiten Signalstrangs 106 sind die Anschlüsse 113 und 114 vorgesehen, um Daten an die Nebeneinheit 120 zu senden bzw. von der Nebeneinheit 140 zu empfangen. Exemplarisch sind für die Nebeneinheit 120 die Anschlüsse eingezeichnet. Ein erster Port empfängt auf dem Anschluss 121 Daten von der Haupteinheit und gibt auf dem Anschluss 122 Daten an die nächste Einheit 130 aus. Ein zweiter Port empfängt auf dem Anschluss 124 Daten von der Nebeneinheit 130 und gibt auf dem Anschluss 123 Daten an die Haupteinheit aus.

Um in den Nebeneinheiten eine gemeinsame Zeitbasis für die Ausgabe von Synchronisationssignalen herzustellen, ist in dem Steuerungssystem die folgende Vorgehensweise implementiert. Zunächst bestimmt die Haupteinheit 110 die Umlaufzeit, die ein Signal für den Durchlauf aller Nebeneinheiten auf einem der Signalstränge benötigt. Dazu sendet die Haupteinheit ein Datentelegramm an wenigstens einen der Signalstränge 105 bzw. 106, das von jeder der Nebeneinheiten empfangen und an die benachbarte Nebeneinheit auf dem gleichen Signalstrang weitergegeben wird. Bei der Rückkehr des Datentelegramms bestimmt die Haupteinheit 110 die Zeit $t_{110-110}$, die vom Senden bis zur Rückkehr vergangen ist. Die von der Haupteinheit ermittelte Signaldurchlaufzeit $t_{110-110}$ wird im Anschluss an die Messung allen Nebeneinheiten mitgeteilt.

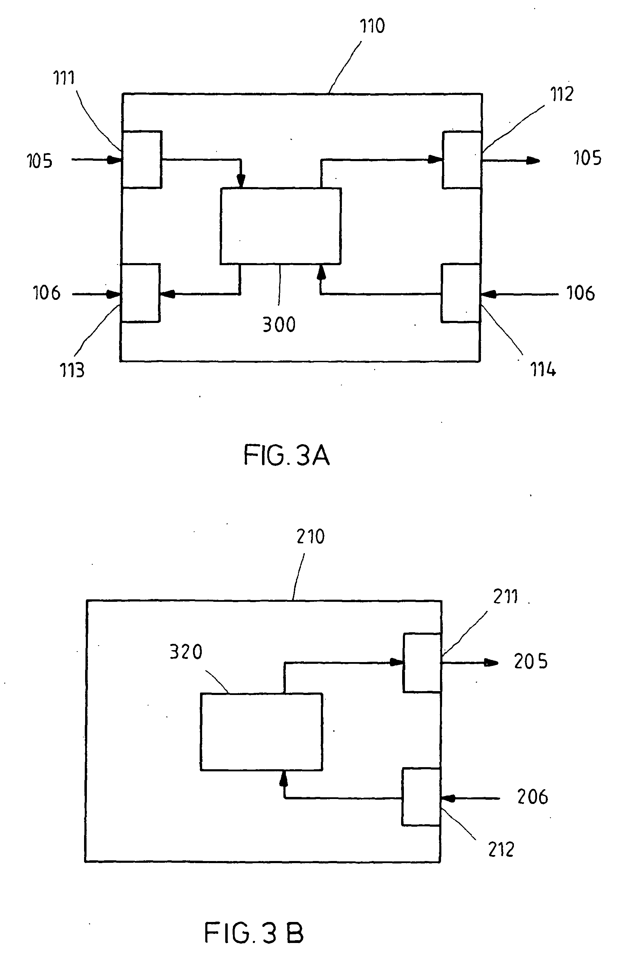

In der Figur 3A ist der Aufbau der Haupteinheit schematisch dargestellt. Eine Steuerelektronik 300 ist mit jedem der Ein- bzw. Ausgänge 111, 112, 113 und 114 verbunden, um Datentelegramme zu empfangen, zu senden und auszuwerten. Des Weiteren ist die Steuerelektronik imstande, beim Absenden eines Datentelegramms eine Zeitmessung zu starten und diese bei Empfang des Datentelegramms auf einem anderen Anschluss zu beenden und auszuwerten.

Wie vorangehend beschrieben ist es notwendig, die Signaldurchlaufzeit für mindestens einen der Signalstränge 105 oder 106 zu bestimmen. Vorzugsweise kann die Haupteinheit jedoch auch die Signaldurchlaufzeit für beide der Signalwege bestimmen. In der in Figur 1 gezeigten Ausführungsform sind die beiden Signalstränge symmetrisch angelegt, das heißt jeder Signalstrang durchläuft die selbe Anzahl an Nebeneinheiten. Zusammen mit der oben erwähnten Bedingung, dass die Übertragung eines Telegramms zwischen benachbarten Einheiten stets die gleiche Übertragungszeit benötigt, ergibt sich für beide Signalstränge eine identische Signallaufzeit für einen Durchlauf eines Datentelegramms durch alle Nebeneinheiten. Daher ist es in der Regel ausreichend, die Signaldurchlaufzeit für nur einen der Signalstränge 105 und 106 zu bestimmen.

Im Falle einer unsymmetrischen Konfiguration der Signalstränge kann es jedoch nötig sein, die Signaldurchlaufzeit für beide Signalstränge zu bestimmen, um somit Rückschlüsse auf die Systemkonfiguration zu ziehen. Des Weiteren lassen sich durch die Bestimmung der Durchlaufzeit beider Signalstränge auch Fehler in der Konfiguration entdecken bzw. der Ausfall eines Signalstrangs feststellen.

Nach der Übermittlung der Durchlaufzeit an alle Nebeneinheiten gibt die Haupteinheit ein Datentelegramm aus, das als Referenzsignal von allen Nebeneinheiten empfangen und an die jeweils benachbarte Neben- oder die Haupteinheit weitergeleitet wird. Dieses Datentelegramm wird vorzugsweise von der Haupteinheit auf beiden Signalsträngen, das heißt an Anschluss 112 und 113, gleichzeitig ausgegeben. Alternativ kann die Ausgabe dieser - als Referenzsignal dienenden - Datentelegramme auf beiden Signalsträngen auch mit einem bekannten Zeitversatz erfolgen. Anhand dieses Referenzsignals ermitteln die Nebeneinheiten Zeitkorrekturparameter um bei der Erzeugung von Synchronisationssignalen eine gemeinsame Zeitbasis herzustellen.

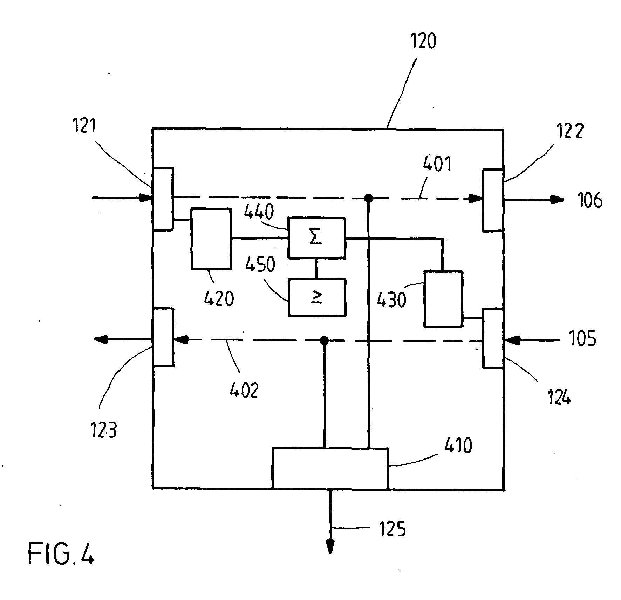

Anhand der Figur 4, in der der Aufbau einer Nebeneinheit skizziert ist, soll im Folgenden die Ermittlung von Zeitkorrekturparametern für die Erzeugung von Synchronisationssignalen näher erläutert werden.

Die dargestellte Nebeneinheit 120 ist mittels zweier Ports in die Signalstränge 105 und 106 eingebunden. Der erste Port mit dem Empfangsanschluss 121 und dem Sendeanschluss 122 stellt die Verbindung für den Signalstrang 106 her. Der zweite Port mit dem Empfangsanschluss 124 und dem Sendeanschluss 123 ermöglicht die Kommunikation über den Signalstrang 105. Erfindungsgemäß sind in der Nebeneinheit 120 zwei Zeitzähler 420 und 430 vorgesehen, die durch den Empfang des Referenzsignals auf dem jeweiligen Signalstrang, also über Anschluss 121 oder 124, gestartet werden. Die Zeitzähler können innerhalb der Nebeneinheit 120 als separate Einheiten implementiert sein. Vorzugsweise sind jedoch die Zeitzähler als Zeitzählungsfunktion einer Steuerelektronik der Nebeneinheit realisiert. Diese und die nachfolgenden beschriebenen funktionellen Einheiten der Nebeneinheit können ebenfalls als diskrete Bausteine oder vorzugsweise innerhalb einer Steuerelektronik, ggf. auch als Software, implementiert sein. Insbesondere ist auch die Verwendung nur eines Zeitzählers möglich, mit dem die Steuerelektronik die Empfangszeitpunkte der Referenzsignale misst und die seitdem vergangene Zeit ermittelt.

Eine Addiereinheit 440 erfasst fortlaufend die Zählstände der Zeitzähler 420 und 430 und bildet die Summe der beiden Zählstände. Die Summe wird einer Vergleichseinrichtung 450 zugeführt, die diese Summe der beiden Zählstände fortlaufend mit der vorab von der Haupteinheit übermittelten Signaldurchlaufzeit vergleicht. Sobald die Summe der Zählstände den Wert der mitgeteilten Signaldurchlaufzeit erreicht oder überschreitet, werden die Zählstände der Zeitzähler 420 und 430 ausgelesen. Auf der Grundlage der ausgelesenen Zeitzählerstände bestimmt die Nebeneinheit Zeitkorrekturparameter für die Erzeugung von Synchronisationssignalen.

Jede Nebeneinheit führt somit die im Folgenden beschriebenen Schritte aus. Eine von der Haupteinheit übermittelte Signaldurchlaufzeit, die wenigstens der Signaldurchlaufzeit durch alle Nebeneinheiten entspricht, wird empfangen. Bei Empfang des Referenzsignals über den ersten Signalstrang startet eine erste Zeitzählung, eine zweite Zeitzählung startet bei Empfang des Referenzsignals über den zweiten Signalstrang. Die beiden Zählstände der Zeitzählungen werden addiert und mit der von der Haupteinheit übermittelten Signaldurchlaufzeit verglichen. Die Zählstände werden ausgelesen, sobald die addierten Zählstände die mitgeteilte Signaldurchlaufzeit erreichen oder überschreiten.

Auf diese Weise ermitteln die Nebeneinheiten in einem parallel ausgeführten Prozess auf sehr einfache und effiziente Weise individuelle Zeitkorrekturparameter für die Erzeugung von Synchronisationssignalen. Diese Zeitkorrekturparameter können insbesondere für eine Berücksichtigung der Signallaufzeit von Datentelegrammen bzw. Steuersignalen von der Haupteinheit zu der jeweiligen Nebeneinheit auf den Signalsträngen 105 und 106 verwendet werden.

Die folgende Berechnung veranschaulicht die Interpretation der ausgelesenen Zählstände der Zeitzähler und gibt ein Beispiel für die Ermittlung von Zeitkorrekturparametern an.

Wie schon erwähnt, wird die Übertragungsdauer - und somit die Signallaufzeit - zwischen zwei Einheiten jeweils als konstant und reproduzierbar angesehen. Weiter geht man davon aus, dass die Übertragungsdauer auf beiden Signalsträngen gleich ist. Somit gilt also, z.B. für die Strecke von der Haupteinheit zu der Nebeneinheit 120, für die einzelnen Signallaufzeiten $\Delta t_{110-120(106)}$ und $\Delta t_{120-110(105)}$ auf dem Signalstrang 106 bzw. dem Signalstrang 105:

$$\Delta t_{110-120(106)} = \Delta t_{120-110(105)} \qquad\qquad \text{Formel 1}$$

Für die in Figur 1 dargestellte symmetrischen Topologie entspricht daher die Signaldurchlaufzeit $\Delta t_{110-110(105)}$

auf dem Signalstrang 105 der Signaldurchlaufzeit $\Delta t1_{110-110(106)}$ auf dem Signalstrang 106.

$$\Delta t_{110-110(105)} = \Delta t_{110-110(106)} \qquad \text{Formel 2}$$

Außerdem gilt daher für die Zeit $\Delta t_{110-120(105)}$, die ein Signal von der Haupteinheit zur Nebeneinheit 120 auf dem Signalstrang 105 benötigt, und die Zeit $\Delta t_{110-120(106)}$, die ein Signal von der Haupteinheit zur Nebeneinheit 120 auf dem Signalstrang 106 benötigt, dass die Summe dieser Zeiten der Signaldurchlaufzeit durch alle Nebeneinheiten entspricht:

$$\Delta t_{110-120(105)} + \Delta t_{110-120(106)} = \Delta t_{110-110(105)} \qquad \text{Formel 3}$$

Beginnt nun eine Zeitzählung bei Empfang des Referenzsignals über den Signalstrang 105 und eine weitere Zeitzählung bei Empfang des Referenzsignals über Signalstrang 106, und werden die jeweiligen Zählerwerte $\Delta t_{z105}$ und $\Delta t_{z106}$ ausgelesen, sobald die Summe der Zählerstände die Signaldurchlaufzeit - z.B. $\Delta t_{110-110(105)}$ — erreicht, dann lautet die Summe der ausgelesenen Zählerstände.

$$\Delta t_{z105} + \Delta t_{z106} = \Delta t_{110-110(105)} \qquad \text{Formel 4}$$

Für jeden Zeitpunkt nach Empfang beider Referenzsignale in der Nebeneinheit, insbesondere für den Auslesezeitpunkt, gilt:

$$\Delta t_{z105} + \Delta t_{110-120(105)} = \Delta t_{z106} + \Delta t_{110-120(106)} \qquad \text{Formel 5}$$

Falls die Referenzsignale von der Haupteinheit nicht gleichzeitig auf beiden Signalsträngen gesendet werden, ist in Formel 5 ein Zeitversatz zu berücksichtigen.
Nach Umformen unter Verwendung der Formeln 3 und 4 ergibt sich aus Formel 5:

$$\Delta t_{z105} + \Delta t_{110-120(105)} = \Delta t_{110-110(105)} \qquad \text{Formel 6a}$$

$$\Delta t_{z106} + \Delta t_{110-120(106)} = \Delta t_{110-110(105)} , \qquad \text{Formel 6b}$$

sowie

$$\Delta t_{110-120(105)} = \Delta t_{z106} \qquad \text{Formel 7a}$$

$$\Delta t_{110-120(106)} = \Delta t_{z105} \qquad\qquad\qquad \text{For-}$$

mel 7b

Somit ermittelt also der an den Signalstrang 106 gekoppelte Zähler die Signallaufzeit für ein auf dem Signalstrang 105 von der Haupteinheit übermitteltes Signal. Umgekehrt ermittelt der an den Signalstrang 105 gekoppelte Zähler die Zeit bis zum Eintreffen eines von der Haupteinheit auf dem Signalstrang 106 gesendeten Signals.

Zur Herstellung einer gemeinsamen Zeitbasis in allen Nebeneinheiten werden die ausgelesenen Zählerstände vorzugsweise wie folgt verwendet. Ein von der Haupteinheit generiertes Datentelegramm wird als Auslösesignal auf einem der Signalstränge allen Nebeneinheiten übermittelt. Jede Nebeneinheit wartet nach Empfang des Auslösesignals eine bestimmte Zeitdauer. Die Wartezeit nach Empfang des Auslösesignals über einen bestimmten Signalstrang entspricht dem ausgelesenen Zählerstand des mit diesem Signalstrang gekoppelten Zählers. Am Beispiel der Nebeneinheit 120 wird also die Wartezeit für den Signalstrang 105 auf den ausgelesenen Zählstand des Zeitzählers 430 gesetzt. Andererseits wird die Wartezeit für den Signalstrang 106 auf den ausgelesenen Zählstand des Zeitzählers 420 gesetzt.

Die Formeln 6a und 6b zeigen, dass der Zeitpunkt nach Empfang des Auslösesignals und Ablauf der jeweiligen Wartezeit für alle Nebeneinheiten identisch ist. Dies ist der Fall, da für jede Nebeneinheit die Summe der Signallaufzeit bis zum Empfang des Auslösesignals und die Wartezeit eine identische Gesamtzeitdauer (seit Ausgabe des Auslösesignals) ergibt. Insbesondere entspricht in der beschriebenen Topologie die Wartezeit einer Signalrestlaufzeit von der Nebeneinheit bis zur Rückkehr bei der Haupteinheit.

Vorzugsweise wird also in der Nebeneinheit der Zeitkorrekturparameter für jeden Signalstrang auf den ausgelesenen Zählerstand gesetzt, und der Zeitkorrekturparameter als Wartezeit nach Empfang eines Auslösesignals verwendet. Nach der Wartezeit generieren die Nebeneinheiten jeweils ein Synchronisationssignal, das somit zeitgleich an den Nebeneinheiten ausgegeben wird. Auf diese Weise erfolgt eine besonders einfache Bestimmung von Zeitkorrekturparametern, die eine zeitgleiche Ausgabe von Synchronisationssignalen in allen Nebeneinheiten ermöglichen.

Des Weiteren stehen die so bestimmten Zeitkorrekturparameter unmittelbar nach dem Auslesen der Zählerstände in den Nebeneinheiten zur Verfügung. Im Gegensatz zu herkömmlichen Verfahren sind weder weitere Rechenoperationen noch eine Übermittlung von Zeitparametern erforderlich.

Die Erfindung ist jedoch nicht darauf beschränkt zeitgleich an verschiedenen Nebeneinheiten Synchronisationssignale auszugeben. Nach Empfang eines von der Haupteinheit gesendeten Datentelegramms, vergleichbar dem Auslösesignal, und der entsprechenden Wartezeit, ist wie oben beschrieben ein identischer Zeitpunkt einer gemeinsamen Zeitbasis in allen Nebeneinheiten erreicht. Dieser Zeitpunkt wird vorzugsweise von den Nebeneinheiten als Referenzzeitpunkt für die Koordination von Steuerungsaufgaben verwendet. So können z.B. die Nebeneinheiten ausgehend von diesem Referenzzeitpunkt individuelle, zeitlich versetzte Synchronisationssignale oder Steuersignale mit hoher Zeitpräzision ausgeben, um angeschlossene Antriebe zu steuern.

Zudem sei angemerkt, dass auch der Auslesezeitpunkt der Zählerstände einem für alle Nebeneinheiten identischen Zeitpunkt der gemeinsamen Zeitbasis entspricht. Somit kann schon der Auslesezeitpunkt unmittelbar als Referenzzeitpunkt verwendet werden.

In der Figur 4 ist innerhalb der Nebeneinheit 120 eine Steuerelektronik zur zeitlich gesteuerten Ausgabe von Synchronisationssignalen durch die Ziffer 410 gekennzeichnet. Eine solche Steuerelektronik kann jedoch mit den anderen Zähl-, Addier- und Vergleichseinheiten 420, 430, 440, 450 in einem gemeinsamen Controller integriert sein. Vorzugsweise ist die Funktion der zeitsynchronen Ausgabe von Synchronisationssignalen mittels einer Software implementiert.

Die Nebeneinheit 120 enthält vorzugsweise eine Speicher um individuelle Zeitkorrekturparameter für jeden Signalstrang abzuspeichern. Vorzugsweise werden, wie oben beschrieben, die ausgelesenen Zeitzählerstände als Zeitkorrekturparameter abgespeichert. In einer effizienten und besonders einfachen Ausführungsform entsprechend dieser abgespeicherten Zeitzählerstände einer Wartezeit zwischen dem Empfang eines Datentelegramms von der Haupteinheit und einem für alle Einheiten simultanen Zeitpunkt. Somit wird eine einfache Zeitsynchronisation zwischen den Nebeneinheiten erzielt.

In der bisher beschriebenen Ausführungsform teilt die Haupteinheit den Nebeneinheiten die Signaldurchlaufzeit für einen Durchlauf durch alle Nebeneinheiten mit. Alternativ kann die Haupteinheit den Nebeneinheiten als Signaldurchlaufzeit aber auch einen Zeitwert mitteilen, der größer ist, als die ermittelte Signaldurchlaufzeit. Auch in diesem Fall ermitteln die Nebeneinheiten nach der oben beschriebenen Vorgehensweise einen identischen Zeitpunkt einer gemeinsamen Zeitbasis. Somit ist es z. B. möglich nachträglich und ggf. während des Betriebs weitere Nebeneinheiten in das System einzubauen. Die dafür benötigte Reservelaufzeit kann im Voraus durch die Haupteinheit berücksichtig werden.

Des Weiteren kann durch die Übermittlung einer größeren Signaldurchlaufzeit eine bekannte Verzögerungen bei der Signalverarbeitung in den Nebeneinheiten berücksichtigt werden. Damit wird erreicht, dass in der jeweiligen Nebeneinheit erst dann der Referenzzeitpunkt auftritt, wenn in dieser Nebeneinheit Verarbeitungskapazität für eine zu diesem Zeitpunkt auszuführende Aufgabe bereit steht.

Zudem können durch die Angabe einer höheren Signaldurchlaufzeit unsymmetrische Signallaufzeiten auf den einzelnen Signalsträngen berücksichtigt werden. In diesem Fall ist es wünschenswert, dass der identische Zeitpunkt der gemeinsamen Zeitskala in den Nebeneinheiten dem Zeitpunkt entspricht, zu dem das Datentelegramm auf dem "längeren" Signalstrang zur Haupteinheit zurückkehrt. Der längere Signalstrang, ist der Signalstrang, auf dem ein die Nebeneinheiten durchlaufendes Datentelegramm die größere Laufzeit benötigt. So wird sichergestellt, dass für alle Nebeneinheiten die Angabe eines Referenzzeitpunktes möglich ist.

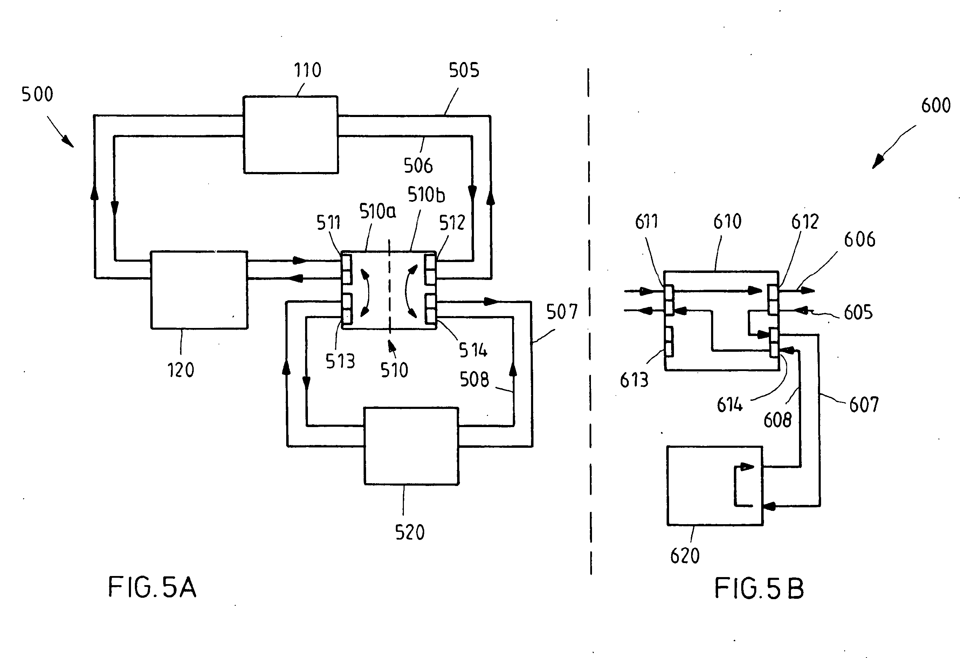

Eine Unsymmetrie zwischen den beiden ringförmigen Signalsträngen kann durch das Einbinden zusätzlicher Nebeneinheiten in nur einen der Signalstränge, wie beispielsweise in Figur 5B gezeigt, auftreten. In diesem Fall ist es ggf. nötig bestimmten Nebeneinheiten Zusatzinformationen hinsichtlich der Signalstrangkonfiguration mitzuteilen.

Beispielsweise kann den Nebeneinheiten mitgeteilt werden, ob sie auf einem Signalstrang die Datentelegramme der Haupteinheit mit der zusätzlichen, die Unsymmetrie bedingenden Verzögerung erhalten oder nicht. Die Nebeneinheiten, die von der zusätzlichen Verzögerung nicht betroffen sind, also Nebeneinheiten, die auf dem in Fig. 5B gezeigten Signalstrang 605 vor der Nebeneinheit 610 liegen, können dann ihre Zeitzählwerte bzw. Zeitkorrekturparameter korrigieren, um einen Referenzzeitpunkt zu erreichen, der mit den von der Verzögerung betroffenen Nebeneinheiten identisch ist. Die Korrektur kann z.B. dadurch erfolgen, dass der Vergleichswert für die addierten Zeitzählerstände in den von der zusätzlichen Verzögerung nicht betroffenen Nebeneinheiten um den zusätzlichen Zeitverzögerungsbetrag erhöht wird.

Alternativ kann auch in einer der Nebeneinheiten eine weitere Signalverzögerung eines Signalstrangs konfiguriert werden, um die topologisch bedingte Unsymmetrie auszugleichen. In diesem Fall ist das in der ersten Ausführungsform beschriebene Verfahren ohne Änderung verwendbar.

In den oben beschriebenen Ausführungsformen kann zudem die Haupteinheit die physikalische Reihenfolge der Nebeneinheiten feststellen, indem sie die ausgelesenen Zählerstände aus jeder der Nebeneinheiten ermittelt.

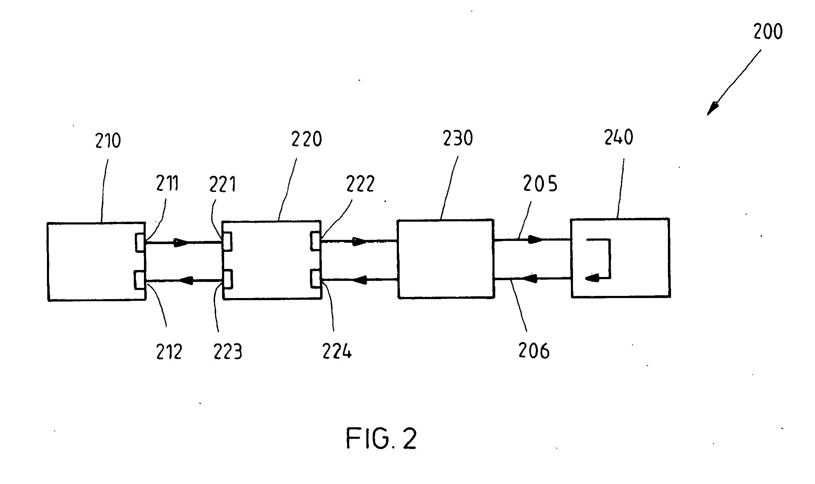

Mit Bezug auf die Figur 2 wird eine zweite Ausführungsform der vorliegenden Erfindung beschrieben. Diese Ausführungsform ist der ersten zuvor beschriebenen Ausführungsform sehr ähnlich. Daher werden vor allem die Merkmale beschrieben, in denen sich die nun folgende Ausführungsform von der vorangehenden unterscheidet.

Wie in der Figur 2 gezeigt, ist in dieser Ausführungsform eines Steuerungssystems eine Haupteinheit 210 vorgesehen und mehrere Nebeneinheiten 220, 230 und 240, die über zwei Signalstränge 205 und 206 mit der Haupteinheit in Verbindung stehen. Erfindungsgemäß sind mindestens zwei Nebeneinheiten vorgesehen. Die Zahl der Nebeneinheiten ist nach oben hin jedoch prinzipiell nicht begrenzt. Die Signalstränge sind jedoch nicht wie bei der vorherigen Ausführungsform ringförmig mit der Haupteinheit verbunden, sondern verlaufen nacheinander von der Haupteinheit ausgehend durch alle Nebeneinheiten. In der aus Sicht der Haupteinheit letzten Nebeneinheit 240 werden die auf dem einen Signalstrang 205 empfangenen Signale auf den anderen, zur Haupteinheit zurückkehrenden Signalstrang 206 übertragen und durchlaufen abermals die Nebeneinheiten 230 und 220.

Mit Ausnahme der letzten Nebeneinheit 240 sind alle Nebeneinheiten 220 und 230 genauso aufgebaut und konfiguriert, wie die in der vorherigen Ausführungsform beschriebene Nebeneinheit 120. Insbesondere weisen diese Nebeneinheiten jeweils zwei Ports auf. Jeder dieser Ports ist mit einem der Signalstränge verbunden. Wie am Beispiel der Nebeneinheit 220 gezeigt, weist ein erster Port einen Empfangsanschluss 221 und einen Sendeanschluss 222 für den ersten Signalstrang auf. Ein zweiter Port weist ein Empfangsanschluss 224 und ein Sendeanschluss 223 für den zweiten Signalstrang auf.

Die Haupteinheit 210 unterscheidet sich in dieser Ausführungsform von der zuvor beschriebenen Haupteinheit 110 dadurch, dass die Haupteinheit nur an zwei Anschlüssen mit entsprechenden Signalsträngen verbunden ist. Wie in Fig. 3B gezeigt, ist ein Port der Haupteinheit 210 so geschaltet, um von einem Anschluss 211 ein Signal an den Signalstrang 205 zu senden, und vom Anschluss 212 ein Signal vom Signalstrang 206 zu empfangen. Eine Steuerelektronik 320 empfängt und sendet Datentelegramme über die zwei Anschlüsse 211 und 212. Die Steuerelektronik ist des Weiteren in der Lage, die Umlaufzeit eines Datentelegramms, das von Anschluss 211 gesendet und nach Durchlauf aller Nebeneinheiten auf Anschluss 212 zurückkehrt, zu bestimmen. Diese Signaldurchlaufzeit, die einem aufeinanderfolgenden Durchlauf beider Signalstränge 205 und 206 entspricht, teilt die Haupteinheit 210 allen Nebeneinheiten 220, 230, 240 mit.

Die aus Sicht der Haupteinheit 210 letzte Nebeneinheit 240 ist ebenfalls nur an einem Port mit den Signalsträngen 205 und 206 verbunden. Außer der Funktionalität der Erzeugung von Synchronisationssignalen hat diese Nebeneinheit 240 die Aufgabe, Signale vom Signalstrang 205 in den Signalstrang 206 überzuleiten.

Für die zeitsynchrone Ausgabe von Synchronisationssignalen werden in dieser Ausführungsform Zeitkorrekturparameter mittels eines Verfahrens ermittelt, dass dem in der ersten Ausführungsform beschriebenen Verfahren weitgehend entspricht. Mit Hilfe der Zeitkorrekturparameter wird, wie in der zuvor beschriebenen Ausführungsform, ein bestimmter Zeitpunkt einer gemeinsamen Zeitbasis in allen Nebeneinheiten angegeben. Auf der Grundlage eines solchen Referenzzeitpunktes, geben die Nebeneinheiten 220, 230, und 240 Synchronisationssignale für die Steuerung angeschlossener Einheiten aus.

Die Ermittlung der Zeitkorrekturparameter erfolgt - wie gesagt - in sehr ähnlicher Weise wie in der zuvor beschriebenen Ausführungsform. Zunächst sendet die Haupteinheit 210 ein Datentelegram an einen der Signalstränge 205 mittels ihres Sendeanschlusses 211. Dieses Datentelegram ist so beschaffen, dass es von jeder Nebeneinheit an die nächste Nebeneinheit auf dem Signalstrang weitergegeben wird. Bei Erreichen der letzten Nebeneinheit 240 auf dem von der Haupteinheit wegführenden Signalstrang 205 überträgt die Nebeneinheit das Datentelegram an den Signalstrang 206, der zur Haupteinheit zurückführt. Die Haupteinheit misst die Signaldurchlaufzeit $\Delta t_{210\text{-}210}$, die das Datentelegram für den Durchlauf der beiden Signalstränge hintereinander benötigt. Dabei werden alle Nebeneinheiten mit Ausnahme der letzten Nebeneinheit 240 auf jedem Signalstrang je einmal durchlaufen.

Die ermittelte Durchlaufzeit $t_{210\text{-}210}$ wird den Nebeneinheiten mitgeteilt.

Daraufhin sendet die Haupteinheit 210 auf dem wegführenden Signalstrang 205 ein Datentelegram, dass als Referenzsignal für die Nebeneinheiten dient und ebenfalls beide Signalwege nacheinander durchläuft. Bei Empfang des Referenzsignals an einem Port startet die Nebeneinheit 220, 230 einen Zeitzähler.

Wie zuvor für die Nebeneinheit 120 beschrieben, sind die Nebeneinheiten mit zwei Zeitzählern versehen. Jeder dieser Zeitzähler ist einem Port in der Weise zugeordnet, dass der Empfang des Referenzsignals an diesem Port den entsprechenden Zeitzähler startet. Der Aufbau und die Funktionsweise der Nebeneinheiten bei der Linienkonfiguration entspricht dem in Fig. 4 gezeigten Aufbau der Nebeneinheiten.

Demzufolge liest jede Nebeneinheit die Zeitzähler aus, wenn die addierten Zeitzählerstände die von der Haupteinheit mitgeteilte Signaldurchlaufzeit erreichen oder überschreiten. Somit ergibt sich für die Zeitzählerstände $t_{z205}$, $t_{z206}$ in analoger Weise zur ersten Ausführungsform:

$$\Delta\, t_{210\text{-}210} = t_{z205} + t_{z206} \qquad\qquad \text{Formel 11}$$

Ebenso gilt für die Signallaufzeiten eines von der Haupteinheit gesendeten Signals bis zum Empfang bei einer Nebeneinheit über die jeweiligen Signalsträngen 205 bzw. 206, wobei für das Beispiel der Nebeneinheit 220 die Zeiten als $\Delta\, t_{220(205)}$, $\Delta\, t_{220(206)}$ bezeichnet werden:

$$\Delta\, t_{210\text{-}210} = \Delta\, t_{220(205)} + \Delta\, t_{220(206)} \qquad\qquad \text{Formel 12}$$

Die vorstehende Gleichung gilt aufgrund der Richtungssymmetrie bei der Übertragung von Datentelegrammen zwischen zwei Nebeneinheiten bzw. der Haupteinheit.

Aufgrund der von der Nebeneinheit durchgeführten Zeitzählung ab Empfang des Referenzsignals gilt in analoger Weise zur Formel 5 sobald an beiden Ports ein Referenzsignal empfangen wurde:

$$\Delta\, t_{220(205)} + \Delta\, t_{z205} = \Delta\, t_{220(206)} + \Delta\, t_{z206} \qquad\qquad \text{Formel 13}$$

Daher ergeben sich die Zeitzählerstände in der Nebeneinheit 220 zum Auslesezeitpunkt wie folgt:

$$\Delta\, t_{220(205)} + \Delta\, t_{z205} = \Delta\, t_{210\text{-}210} \qquad\qquad \text{Formel 14a}$$

$$\Delta\, t_{220(206)} + \Delta\, t_{z206} = \Delta\, t_{210\text{-}210} \qquad\qquad \text{Formel 14b}$$

und

$$\Delta\ t_{220(205)} = \Delta\ t_{z206} \qquad\qquad \text{Formel 15a}$$

$$\Delta\ t_{220(206)} = \Delta\ t_{z205} \qquad\qquad \text{Formel 15b.}$$

Diese Gleichungen lassen sich für jede Nebeneinheit des in Fig. 2 gezeigten Steuersystems entsprechend angeben. Sie entsprechen den Gleichungen Formel 6a, 6b und Formel 7a, 7b, die für die erste Ausführungsform ermittelt wurden.

Die in Formel 15a, b berechneten Signallaufzeiten lassen sich für die Ermittlung von Zeitkorrekturparametern verwenden. Vorzugsweise werden aber die ermittelten Zeitzählerstände direkt als Zeitkorrekturparameter verwendet.

Wie schon für die erste Ausführungsform beschrieben, können die Zählerstande als Wartezeit verwendet werden, um in allen Nebeneinheiten einen identischen Zeitpunkt in einer gemeinsamen Zeitbasis anzugeben. Bei einer solchen Verwendung sendet die Haupteinheit ein Auslösesignal an alle Nebeneinheiten auf wenigstens einem der Sighalstränge 205 oder 206. Der Zeitpunkt nach Empfang des Auslösesignals auf einem Signalstrang und nach dem Warten einer bestimmten Zeitverzögerung, gibt einen für alle Nebeneinheiten identischen Zeitpunkt an, wenn die Wartezeit dem Zeitzählerstand entspricht, der diesem Signalsstrang zugeordnet ist. Dies ist aus Formel 14a, b direkt ersichtlich. In der Regel fällt diese Zeit mit der Rückkehr des Auslösesignals bei der Haupteinheit zusammen.

Wie in der vorherigen Ausführungsform beschrieben, kann die von der Haupteinheit mitgeteilte Signaldurchlaufzeit zusätzlich zur gemessenen Durchlaufzeit einen Zeitpuffer enthalten.

Eine Ausnahme bei der Ermittlung von Zeitkorrekturparametern ergibt sich für die letzte Nebeneinheit 240 auf dem von der Haupteinheit 210 wegführenden Signalstrang 205. Prinzipiell kann diese Nebeneinheit genauso aufgebaut sein, wie die Nebeneinheiten 220 und 230. Diese Nebeneinheit empfängt das Referenzsignal jedoch nur auf einem Port, genauer gesagt nur auf einem Anschluss. Bei der Durchführung des beschriebenen Zähl- und Vergleichsverfahrens wird daher nur ein Zähler gestartet und die Zählerstände ausgelesen sobald dieser Zähler die mitgeteilte Signaldurchlaufzeit erreicht. Aus diesem Ergebnis und/oder aus der Tatsache, dass nur ein Port belegt ist, kann die Nebeneinheit Rückschlüsse auf ihre Anordnung innerhalb des Steuerungssystems ziehen. Alternativ kann die Nebeneinheit manuell entsprechend konfiguriert sein.

Auf der Grundlage dieser Information setzt die Nebeneinheit geeignete Zeitkorrekturparameter. Solche Zeitkorrekturparameter entsprechen vorzugsweise der Hälfte der von der Haupteinheit mitgeteilten Signaldurchlaufzeit.

Anhand der Figuren 5A und 5B werden im Folgenden weitere Ausführungsformen der vorliegenden Erfindung beschrieben. Dabei handelt es sich insbesondere um Ausführungsformen, bei denen die Nebeneinheiten mehr als zwei Ports aufweisen, demzufolge also mit mehr als zwei Signalsträngen verbunden sind.

Die in Fig. 5A gezeigte Ausführungsform eines Steuerungssystems 500 weist eine Haupteinheit 110 auf, die der in der ersten Ausführungsform beschriebenen Haupteinheit entspricht. Zudem sind Nebeneinheiten 120 und 510 vorhanden, die über jeweils zwei ringförmige Signalstränge 505 und 506 mit der Haupteinheit 110 verbunden sind.

An die Nebeneinheit 510 sind zwei weitere ringförmige Signalstränge 507 und 508 angeschlossen. Diese Signalstränge stellen die Verbindung zu einer oder mehreren weiteren Nebeneinheiten 520 her. Somit entspricht diese Konfiguration eines Steuerungssystems einer Kaskade von zwei ringförmigen Teilsystemen. Für die Signalstränge 507 und 508 tritt die Nebeneinheit 520 als Unter-Haupteinheit (Sub-Master) auf. Die Nebeneinheit 520 weist 4 Ports 511, 512, 513 und 514 mit jeweils einem Empfangsanschluss und einem Sendeanschluss auf. Die Anschlüsse sind so ausgeführt, dass zwischen den Ports 512 und 514 und zwischen den Ports 511 und 513 eine Signalweiterleitung eingerichtet ist. Durch diese Signalweiterleitung wird der Signalstrang 507 in den Signalstrang 505 eingebunden und der Signalstrang 508 in den Signalstrang 506.

Für die Ermittlung von Zeitkorrekturparametern für die Erzeugung von zeitsynchronen Synchronisationssignalen wird die Nebeneinheit 510 wie zwei voneinander unabhängige Teilnebeneinheiten 510a und 510b behandelt, wobei die eine Teilnebeneinheit 510a die zwei Ports 511 und 513, und die andere Teilnebeneinheit 510b die Ports 512 und 514 aufweist. Jede dieser Teilnebeneinheiten hat den mit Bezug auf Fig. 4 bereits beschriebenen Aufbau. Unter anderem enthält jede Teilnebeneinheit 510a und 510b zwei, den einzelnen Signalsträngen zugeordnete Zähler. In dieser Betrachtungsweise ist die Konfiguration dieses Steuerungssystems 500 äquivalent zu der Konfiguration des in der ersten Ausführungsform beschriebenen Steuerungssystems. Somit erfolgt die Bestimmung der Zeitkorrekturparameter auf dieselbe Art und Weise.

Anstelle der Kaskadierung zweier ringförmiger Teilsysteme kann auch eine Mehrfachkaskade verwendet werden. In diesem Fall ist jedes ringförmige Teilsystem in ein anderes Teilsystem eingebunden. Die Teilsysteme können dabei streng hierarchisch untereinander angeordnet sein. Es ist aber auch die parallele Einbindungen mehrerer Teilsysteme in ein anderes Teilsystem mittels einer oder mehreren 4-Port Nebeneinheiten möglich. Auch die Verwendung von Nebeneinheiten mit mehr als 4 Ports ist denkbar. Solange die Signalweiterleitung und die Zuordnung von Zeitzählern auf eine solche Weise erfolgt, dass zwei durchgängige ringförmige Signalstränge aus den Signalsträngen der Teilsysteme gebildet werden, kann die zuvor beschriebene Ermittlung der Zeitkorrekturparameter für alle Nebeneinheiten und ggf. Teilnebeneinheiten unverändert durchgeführt werden.

Das in Figur 5B in einem Ausschnitt gezeigt Steuerungssystem 600 ist ähnlich wie das in Fig. 5A gezeigte Steuerungssystem 500 aufgebaut. Der Ausschnitt zeigt eine Nebeneinheit 610, die mittels zweier Ports 611, 612 mit zwei ringförmigen Signalsträngen verbunden ist. An einem weiteren Port 614 sind zwei lineare Signalstränge 607 und 608 angeschlossen. Auf diesen Signalsträngen können mehrere Nebeneinheiten angeordnet sein. Die letzte Nebeneinheit 620 auf dem von der Nebeneinheit 610 wegführenden Signalstrang überträgt Signale in den zurückführenden Signalstrang 608. Falls in der Nebeneinheit 610 ein weiterer Port 613 vorhanden ist, bleibt dieser unbelegt.

Innerhalb der Nebeneinheit 610 sind Signalweiterleitungsregeln definiert. Im gezeigten Beispiel lauten diese:

$$611 \rightarrow 612, 612 \rightarrow 614, 614 \rightarrow 611$$

Somit wird werden die Signalstränge 607 und 608 nacheinander in den Signalstrang 605 eingefügt. Die beiden Signalstränge 607 und 608 können alternativ oder auch zusätzlich in den Signalstrang 606 eingefügt werden, indem entsprechende Weiterleitungsregeln festgelegt werden.

Für diese Nebeneinheit sind, wie für die Nebeneinheit 510 laut der vorherigen Ausführungsform, zwei Paar Zähler vorgesehen. Ein erstes Paar Zähler überwacht die Ports 611 und 612 hinsichtlich des Eintreffen eines Referenzsignals. Ein zweites Paar überwacht die Ports 611 und 614. Alternativ kann das zweite Paar Zähler auch die Ports 612 und 614 überwachen.

Unter Verwendung dieser Zählerpaare lassen sich - wie in den vorherigen Ausführungformen beschrieben - Zeitkorrekturparameter für die zeitsynchrone Erzeugung von Synchronisationssignalen bestimmen.

Zusammenfassend gibt die vorliegende Erfindung ein Synchronisationsverfahren, ein Steuerungssystem, sowie eine Nebeneinheit an, um die Zeitsynchronisation mindestens zweier Nebeneinheiten zu bewerkstelligen. Die Nebeneinheiten und die Haupteinheit sind durch zwei Signalstränge verbunden. Ein von der Haupteinheit gesendetes Signal kehrt nach einem Durchlauf aller Nebeneinheiten zur Haupteinheit zurück. In jeder Nebeneinheit sind zwei voneinander unabhängige Zähler vorgesehen, die durch Empfang eines Referenzsignals, das die Haupteinheit sendet, aktiviert werden. Dabei zählt der erste Zeitzähler die Zeit seit dem Empfang des Referenzsignals über den ersten Signalstrang und der zweite Zeitzähler die Zeit seit dem Empfang des Referenzsignals über den zweiten Signalstrang. Die Zählerstände werden ausgelesen sobald die Summe der Zählerstände eine zuvor von der Haupteinheit mitgeteilten Signaldurchlaufzeit erreicht.

In vorteilhafter Weise gibt die vorliegende Erfindung somit eine einfache und automatische Ermittlung von absoluten Zeitmesswerten an, die eine definierte Zuordnung zu je einem der Signalstränge besitzen. Diese Vorgehensweise der Ermittlung individueller, den Signalsträngen zugeordneter Zeitmesswerte ermöglicht erst die praktisch automatische und unmittelbare Übernahme von Zeitmesswerten als Korrekturparameter einer Zeitsynchronisation.

**Patentansprüche**

1. Synchronisationsverfahren für die zeitliche Synchronisation mindestens zweier Nebeneinheiten (120, 130; 220, 230), die durch eine Haupteinheit (110; 210) gesteuert werden, wobei zwei Signalstränge (105, 106; 205, 206) vorgesehen sind, die jeweils jede Nebeneinheit (120, 130; 220, 230) in zueinander gegensinniger Reihenfolge genau einmal durchlaufen, und die Signalstränge (105, 106; 205, 206) so konfiguriert sind, dass ein von der Haupteinheit (110; 210) gesendetes Signal auf zumindest einem der Signalstränge (105, 106; 205, 206) alle Nebeneinheiten durchläuft und zur Haupteinheit zurückkehrt, wobei das Synchronisationsverfahren die folgenden Schritte umfasst:

   Bestimmen der Signaldurchlaufzeit, die ein von der Haupteinheit (110; 210) gesendetes Signal bis zur Rückkehr benötigt, und
   Mitteilen der Signaldurchlaufzeit an alle Nebeneinheiten (120, 130; 220, 230),
   Senden zumindest eines Steuersignals von der Haupteinheit (110, 120) an alle Nebeneinheiten (120, 130; 220, 230) als Referenzsignal, so dass jede Nebeneinheit über beide Signalstränge (105, 106; 205, 206) das zumindest eine Steuersignal empfängt,

   **dadurch gekennzeichnet, dass**
   jede Nebeneinheit (120, 130; 220, 230) die folgenden Schritte ausführt:

Starten einer ersten Zeitzählung bei Empfang des zumindest einen Steuersignals über den ersten Signalstrang (105; 205),

Starten einer zweiten Zeitzählung bei Empfang des zumindest einen Steuersignals über den zweiten Signalstrang (106; 206),

Addieren der zwei Zeitzählungsstände,

Vergleichen der addierten Zeitzählungsstände mit der mitgeteilten Signaldurchlaufzeit,

Auslesen der Zeitzählungsstände, sobald die addierten Zeitzählungsstände der mitgeteilten Signaldurchlaufzeit entsprechen; und

wobei ein Zeitkorrekturparameter für jede Nebeneinheit (120, 130; 220, 230) bezüglich jedes Signalstranges (105, 106; 205, 206) auf der Grundlage wenigstens eines ausgelesenen Zählerstandes bestimmt wird, und die Nebeneinheiten (120, 130; 220, 230) unter Berücksichtigung der Zeitkorrekturparameter die zeitliche Synchronisation durchführen,

wobei die Haupteinheit (110; 210) den Nebeneinheiten (120, 130; 220, 230) ein Steuersignal sendet, das als Auslösesignal zur Erzeugung von Synchronisationssignalen dient, und

der seitens der Nebeneinheit einem der Signalstränge zugeordnete Zeitkorrekturparameter einer Wartezeit entspricht, und bei Empfang des Auslösesignals über diesen Signalstrang, die Nebeneinheit das Synchronisationssignal nach Ablauf der Wartezeit ausgibt.

2. Synchronisationsverfahren nach Anspruch 1, wobei jede Nebeneinheit (120, 130; 220, 230) jeweils einen Zeitkorrekturparameter bezüglich jedes Signalstranges (105, 106; 205, 206) bestimmt.

3. Synchronisationsverfahren nach einem der Ansprüche 1 bis 2, wobei die Haupteinheit (110, 210) den Nebeneinheiten (120, 130; 220, 230) ein Steuersignal sendet, und die Nebeneinheiten nach Empfang des Steuersignals auf einem Signalstrang (105; 205) eine Zeit warten, die dem diesem Signalstrang (105; 205) zugeordneten Zeitkorrekturparameter entspricht, um somit allen Nebeneinheiten einen identischen Zeitpunkt anzugeben.

4. Synchronisationsverfahren nach einem der Ansprüche 1 bis 3, wobei die zwei Signalstränge (205, 206) so konfiguriert sind, dass die Nebeneinheiten (220, 230, 240) von der Haupteinheit (210) ausgehend seriell miteinander verbunden sind, und die aus Sicht der Haupteinheit letzte Nebeneinheit (240) Signale von dem einen Signalstrang (205) in den anderen Signalstrang (206) überträgt.

5. Synchronisationsverfahren nach einem der Ansprüche 1 bis 3, wobei die zwei Signalstränge (105, 106) jeweils zwei ringförmige von der Haupteinheit (110) ausgehende und zu dieser zurückkehrende Signalwege bilden.

6. Synchronisationsverfahren nach Anspruch 5, wobei die Haupteinheit (110) die Signaldurchlaufzeit für jeden der ringförmigen Signalwege bestimmt.

7. Synchronisationsverfahren nach Anspruch 5 oder 6, wobei die Haupteinheit (110) jeweils ein Steuersignal gleichzeitig an beide Signalwegen sendet.

8. Synchronisationsverfahren nach einem der Ansprüche 5 bis 7, wobei die Signaldurchlaufzeit der ringförmigen Signalwege (105, 106) jeweils gleich ist.

9. Synchronisationsverfahren nach Anspruch 4, wobei die Signallaufzeit von der Haupteinheit (210) zur letzten Nebeneinheit (240) auf dem einen Signalstrang (205) der Signallaufzeit von der letzten Nebeneinheit (240) zur Haupteinheit (210) auf dem anderen Signalstrang (206) entspricht.

10. Synchronisationsverfahren nach einem der Ansprüche 1 bis 9, wobei der seitens der Nebeneinheit (120; 220) für einen Signalstrang (105; 205) bestimmte Zeitkorrekturparameter ein Maß für die Signallaufzeit von der Haupteinheit (110; 210) zu dieser Nebeneinheit (120; 220) auf dem anderen Signalstrang (106; 206) ist.

11. Synchronisationsverfahren nach einem der Ansprüche 1 bis 10, wobei die Nebeneinheiten (120, 130, 140; 220, 230, 240) jeweils den ausgelesenen Zeitzählungsstand der ersten Zeitzählung als Zeitkorrekturparameter für den ersten Signalstrang (105; 205) abspeichern und den ausgelesenen Zeitzählungsstand der zweiten Zeitzählung als Zeitkorrekturparameter für den zweiten (106; 206) Signalstrang abspeichern.

12. Synchronisationsverfahren nach einem der Ansprüche 2 bis 11, wobei die Ausgabe der Synchronisationssignale zeitgleich mit der Rückkehr des Auslösesignals bei der Haupteinheit (110; 210) erfolgt.

13. Synchronisationsverfahren nach einem der Ansprüche 5 bis 7, wobei die Signaldurchlaufzeit der ringförmigen Signalwege (605, 606) unterschiedlich ist.

14. Synchronisationsverfahren nach Anspruch 13, wobei die Ausgabe der Synchronisationssignale zeitgleich mit der Rückkehr des Auslösesignals erfolgt, das die längere Signaldurchlaufzeit für die Rückkehr zur Haupteinheit benötigt.

15. Synchronisationsverfahren nach einem der Ansprüche 1 bis 14, wobei die Haupteinheit (110; 210) eine Signaldurchlaufzeit mitteilt, die größer ist als die ermittelte Signaldurchlaufzeit.

16. Synchronisationsverfahren nach Anspruch 15, wobei die mitgeteilte Signaldurchlaufzeit einer Signaldurchlaufzeit entspricht, die sich durch das zusätzlichen Einfügen einer vorgegebenen Zahl an Nebeneinheiten in die Signalwege ergibt.

17. Synchronisationsverfahren nach einem der Ansprüche 1 bis 16, wobei die Schritte des Addierens der Zeitzählungsstände und des Vergleichens der addierten Zeitzählungsstände mit der mitgeteilten Signaldurchlaufzeit jeweils fortlaufend ausgeführt werden.

18. Steuerungssystem (100) für die zeitliche Synchronisation mindestens zweier Nebeneinheiten (120, 130; 220, 230), das die mindesttens zwei Nebeneinheiten (120, 130,220, 230) und eine Haupteinheit (110; 210) zur Steuerung der mindestens zwei Nebeneinheiten (120, 130; 220, 230) aufweist, und mit zwei Signalsträngen (105, 106; 205, 206), die jeweils jede Nebeneinheit (120, 130; 220, 230) in zueinander gegensinniger Reihenfolge genau einmal durchlaufen, wobei die Signalstränge (105, 106; 205, 206) so konfiguriert sind, dass ein von der Haupteinheit (110; 210) gesendetes Signal auf zumindest einem der Signalstränge (105, 106; 205, 206) alle Nebeneinheiten (120, 130; 220, 230) durchläuft und zur Haupteinheit (110; 210) zurückkehrt, und die Haupteinheit (110; 210) aufweist:

eine Zeitmesseinrichtung zum Bestimmen der Signaldurchlaufzeit, die ein von der Haupteinheit (110; 210) gesendetes Signal bis zur Rückkehr benötigt, und

eine Kommunikationseinrichtung, um die Signaldurchlaufzeit an alle Nebeneinheiten (120, 130; 220, 230) mitzuteilen;

die Kommunikationseinrichtung des Weiteren dazu ausgebildet ist, um zumindest ein Steuersignal von der Haupteinheit (110; 210) an alle Nebeneinheiten (120, 130; 220, 230) als Referenzsignal zu senden, so dass jede Nebeneinheit (120, 130; 220, 230) über beide Signalstränge das zumindest eine Steuersignal empfängt,

**dadurch gekennzeichnet, dass**
jede Nebeneinheit (120, 130; 220, 230) aufweist: '

einen ersten Zeitzähler (430), der eine erste Zeit seit dem Empfang des zumindest einen Steuersignals über den ersten Signalstrang (105; 205) zählt,

einen zweiten Zeitzähler (420), der eine zweite Zeit seit dem Empfang des zumindest einen Steuersignals über den zweiten Signalstrang (106; 206) zählt,

eine Steuereinrichtung mit einer Addiereinrichtung (440) zum Addieren der zwei Zeitzählerstände, einer Vergleichseinrichtung (450) zum Vergleichen der addierten Zeitzählerstände mit der mitgeteilten Signaldurchlaufzeit, und einer Einrichtung zum Auslesen der Zeitzählerstände sobald die addierten Zeitzählerstände der mitgeteilten Signaldurchlaufzeit entsprechen; und

wobei ein Zeitkorrekturparameter für jede Nebeneinheit (120, 130; 220, 230) bezüglich jedes Signalstranges (105, 106; 205, 206) auf der Grundlage wenigstens eines ausgelesenen Zeitzählerstandes bestimmt wird, und

wobei die Nebeneinheiten (120, 130; 220, 230) dazu ausgebildet sind, um unter Berücksichtigung der Zeitkorrekturparameter die zeitliche Synchronisation durchführen, und

wobei die Kommunikationseinrichtung der Haupteinheit (110; 210) so ausgebildet ist, um den Nebeneinheiten (120, 130; 220, 230) ein Steuersignal zu senden, das als Auslösesignal zur Erzeugung von Synchronisationssignalen dient und

wobei der seitens der Nebeneinheit einem der Signalstränge (105; 205) zugeordnete Zeitkorrekturparameter einer Wartezeit entspricht, und bei Empfang des Auslösesignals über diesen Signalstrang (105; 205), die Nebeneinheit (120; 220) das Synchronisationssignal nach Ablauf der Wartezeit ausgibt.

19. Steuerungssystem nach Anspruch 18, wobei in jeder Nebeneinheit (120, 130; 220, 230) die Steuereinrichtung so ausgebildet ist, um jeweils einen Zeitkorrekturparameter bezüglich jedes Signalstranges (105, 106; 205, 206) zu bestimmen.

20. Steuerungssystem nach einem der Ansprüche 18 bis 19, wobei die Haupteinheit (110, 210) den Nebeneinheiten (120, 130; 220, 230) ein Steuersignal sendet, und die Nebeneinheiten nach Empfang des Steuersignals auf einem Signalstrang (105; 205) eine Zeit warten, die dem diesem Signalstrang (105; 205) zugeordneten Zeitkorrekturparameter entspricht, um somit allen Nebeneinheiten einen identischen Zeitpunkt anzugeben.

21. Steuerungssystem nach einem der Ansprüche 18 bis 20, wobei die zwei Signalstränge (205, 206) so konfiguriert sind, dass die Nebeneinheiten (220, 230, 240) von der Haupteinheit (210) ausgehend seriell miteinander verbunden sind, und die aus Sicht der Haupteinheit (210) letzte Nebeneinheit (240) Signale von dem einen Signalstrang (205) in den anderen Signalstrang (206) überträgt.

22. Steuerungssystem einem der Ansprüche 18 bis 20, wobei die zwei Signalstränge (105, 106) jeweils zwei ringförmige von der Haupteinheit (110) ausgehende und zu dieser zurückkehrende Signalwege bilden.

23. Steuerungssystem nach Anspruch 22, wobei die Zeitmesseinrichtung so ausgebildet ist, um die Signaldurchlaufzeit für jeden der ringförmigen Signalwege (105, 106) zu bestimmen.

24. Steuerungssystem nach Anspruch 22 oder 23, wobei die Kommunikationseinrichtung jeweils ein Steuersignal gleichzeitig an beide Signalwegen (105, 106) sendet.

25. Steuerungssystem nach einem der Ansprüche 22 bis 24, wobei die Signaldurchlaufzeit der ringförmigen Signalwege (105, 106) jeweils gleich ist.

26. Steuerungssystem nach Anspruch 21, wobei die Signallaufzeit von der Haupteinheit (210) zur letzten Nebeneinheit (240) auf dem einen Signalstrang (205) der Signallaufzeit von der letzten Nebeneinheit (240) zur Haupteinheit (210) auf dem anderen Signalstrang (206) entspricht.

27. Steuerungssystem nach einem der Ansprüche 18 bis 26, wobei der seitens der Nebeneinheit (120, 130, 140; 220, 230, 240) für einen Signalstrang (105; 205) bestimmte Zeitkorrekturparameter ein Maß für die Signallaufzeit von der Haupteinheit (110; 210) zu dieser Nebeneinheit (120, 130, 140; 220, 230, 240) auf dem anderen Signalstrang (106; 206) ist.

28. Steuerungssystem nach einem der Ansprüche 18 bis 27, wobei die Nebeneinheiten (120, 130, 140; 220, 230, 240) jeweils einen Speicher aufweisen, um den ausgelesenen Zeitzählerstand des ersten Zeitzählers (430) als Zeitkorrekturparameter für den ersten Signalstrang (105; 205) zu speichern und den ausgelesenen Zeitzählerstand des zweiten Zeitzählers (420) als Zeitkorrekturparameter für den zweiten Signalstrang (106; 206) zu speichern.

29. Steuerungssystem nach einem der Ansprüche 18 bis 28, wobei die Angabe eines für alle Nebeneinheiten (120, 130; 220, 230) identischen Zeitpunktes zeitgleich mit der Rückkehr des Steuersignals bei der Haupteinheit (110; 210) erfolgt.

30. Steuerungssystem nach einem der Ansprüche 22 bis 24, wobei die Signaldurchlaufzeit der ringförmigen Signalwege (605, 606) unterschiedlich ist.

31. Steuerungssystem nach Anspruch 30, wobei die Angabe eines für alle Nebeneinheiten (120, 130; 220, 230) identischen Zeitpunktes zeitgleich mit der Rückkehr des Steuersignals erfolgt, das die längere Signaldurchlaufzeit für die Rückkehr zur Haupteinheit benötigt.

32. Steuerungssystem nach einem der Ansprüche 18 bis 31, wobei die Haupteinheit (110; 210) eine Signaldurchlaufzeit mitteilt, die größer ist als die ermittelte Signaldurchlaufzeit.

33. Steuerungssystem nach Anspruch 32, wobei die mitgeteilte Signaldurchlaufzeit einer Signaldurchlaufzeit entspricht, die sich durch das zusätzlichen Einfügen einer vorgegebenen Zahl an Nebeneinheiten in die Signalwege ergibt.

34. Steuerungssystem nach einem der Ansprüche 18 bis 33, wobei die Addiereinrichtung (440) fortlaufend die Zeitzählerstände addiert und die Vergleichseinrichtung (450) fortlaufend die addierten Zeitzählerstände mit der mitgeteilten Signaldurchlaufzeit vergleicht.

35. Zeitsynchronisierbare Nebeneinheit eines Steuerungssystems (100; 200; 500; 600), wobei die Nebeneinheit von einer Haupteinheit (110; 210) gesteuert wird, und zwei Signalstränge (105, 106; 205, 206) die Nebeneinheit durchlaufen, wobei die Nebeneinheit eine von der Haupteinheit (110; 210) mitgeteilte Signaldurchlaufzeit empfängt und des Weiteren über beide Signalstränge (105, 106; 205, 206) ein Referenzsignal empfängt, das die, Haupteinheit in Form von zumindest einem Steuersignal an die Nebeneinheit sendet, **gekennzeichnet durch**,

einen ersten Zeitzähler (430), der eine erste Zeit seit dem Empfang des Referenzsignals über den ersten Signalstrang (105; 205) zählt,
einen zweiten Zeitzähler (420), der eine zweite Zeit seit dem Empfang des Referenzsignals über den zweiten Signalstrang (205; 206) zählt,
eine Steuereinrichtung mit einer Addiereinrichtung (440) zum Addieren der zwei Zeitzählerstände, einer Vergleichseinrichtung (450) zum Vergleichen der addierten Zeitzählerstände mit der mitgeteilten Signaldurchlaufzeit, und einer Einrichtung zum Auslesen der Zeitzählerstände sobald die addierten Zeitzählerstände der mitgeteilten Signaldurchlaufzeit entsprechen, und

wobei ein Zeitkorrekturparameter bezüglich jedes Signalstranges (105, 106; 205, 206) für die Nebeneinheit auf der Grundlage wenigstens eines ausgelesenen Zeitzählerstandes bestimmt wird,
wobei die Nebeneinheit dazu ausgebildet ist, unter Berücksichtigung der Zeitkorrekturparameter die zeitliche Synchronisation durchführen, und
wobei die Nebeneinheit dazu ausgebildet ist, ein Steuersignal von der Haupteinheit (110; 210) zu empfangen, das als Auslösesignal zur Erzeugung von Synchronisationssignalen dient, und wobei
der seitens der Nebeneinheit einem Signalstrang (105; 205) zugeordnete Zeitkorrekturparameter einer Wartezeit entspricht, und bei Empfang des Auslösesignals über diesen Signalstrang (105; 205), die Nebeneinheit das Synchronisationssignal (125) nach Ablauf der Wartezeit ausgibt.

36. Nebeneinheit nach Anspruch 35, wobei die Steuereinrichtung so ausgebildet ist, um jeweils einen Zeitkorrekturparameter bezüglich jedes Signalstranges (105, 106; 205, 206) zu bestimmen.

37. Nebeneinheit nach einem der Ansprüche 35 bis 36, wobei die Nebeneinheit ein Steuersignal von der Haupteinheit (110; 210) auf einem Signalstrang (105; 205) empfängt, und anschließend eine Zeit wartet, die dem diesem Signalstrang (105; 205) zugeordneten Zeitkorrekturparameter entspricht, um somit einen Referenzzeitpunkt anzugeben.

38. Nebeneinheit nach einem der Ansprüche 35 bis 37, wobei der seitens der Nebeneinheit für einen Signalstrang (105; 205) bestimmte Zeitkorrekturparameter als Maß für die Signallaufzeit von der Haupteinheit zu der Nebeneinheit auf dem anderen Signalstrang (106; 206) gesetzt wird.

39. Nebeneinheit nach einem der Ansprüche 35 bis 38, wobei die Nebeneinheit einen Speicher aufweist, um den ausgelesenen Zeitzählerstand des ersten Zeitzählers (430) als Zeitkorrekturparameter für den ersten Signalstrang (105; 205) zu speichern und den ausgelesenen Zeitzählerstand des zweiten Zeitzählers (420) als Zeitkorrekturparameter für den zweiten Signalstrang (106; 206) zu speichern.

40. Nebeneinheit nach einem der Ansprüche 35 bis 39, wobei die Addiereinrichtung (440) fortlaufend die Zeitzählerstände addiert und die Vergleichseinrichtung (450) fortlaufend die addierten Zeitzählerstände mit der mitgeteilten Signaldurchlaufzeit vergleicht.

41. Synchronisationsverfahren für die zeitliche Synchronisation mindestens zweier Nebeneinheiten (120, 130; 220, 230), die durch eine Haupteinheit (110; 210) gesteuert werden, wobei zwei Signalstränge (105, 106; 205, 206) vorgesehen sind, die jeweils jede Nebeneinheit (120, 130; 220, 230) in zueinander gegensinniger Reihenfolge genau einmal durchlaufen, und die Signalstränge (105, 106; 205, 206) so konfiguriert sind, dass ein von der Haupteinheit (110; 210) gesendetes Signal auf zumindest einem der Signalstränge (105, 106; 205, 206) alle Nebeneinheiten durchläuft und zur Haupteinheit zurückkehrt, wobei das Synchronisationsverfahren die folgenden Schritte umfasst:

Bestimmen der Signaldurchlaufzeit, die ein von der Haupteinheit (110; 210) gesendetes Signal bis zur Rückkehr benötigt, und
Mitteilen der Signaldurchlaufzeit an alle Nebeneinheiten (120, 130; 220, 230);

Senden zumindest eines Steuersignals von der Haupteinheit (110, 120) an alle Nebeneinheiten (120, 130; 220, 230) als Referenzsignal, so dass jede Nebeneinheit über beide Signalstränge (105, 106; 205, 206) das zumindest eine
Steuersignal empfängt,

**dadurch gekennzeichnet, dass**

jede Nebeneinheit (120, 130; 220, 230) die folgenden Schritte ausführt:

    Starten einer ersten Zeitzählung bei Empfang des zumindest einen Steuersignals über den ersten Signalstrang (105; 205),
    Starten einer zweiten Zeitzählung bei Empfang des zumindest einen Steuersignals über den zweiten Signalstrang (106; 206),
    Addieren der zwei Zeitzählungsstände,
    Vergleichen der addierten Zeitzählungsstände mit der mitgeteilten Signaldurchlaufzeit,
    Ermitteln des Zeitpunktes, an dem die addierten Zeitzählungsstände der mitgeteilten Signaldurchlaufzeit entsprechen; und

wobei die Nebeneinheiten (120, 130; 220, 230) sich auf der Grundlage des ermittelten Zeitpunktes synchronisieren, wobei die Haupteinheit (110; 210) den Nebeneinheiten (120, 130; 220, 230)

ein Steuersignal sendet, das als Auslösesignal zur Erzeugung von Synchronisationssignalen dient, und der seitens der Nebeneinheit einem der Signalstränge zugeordnete Zeitkorrekturparameter einer Wartezeit entspricht, und bei Empfang des Auslösesignals über diesen Signalstrang die Nebeneinheit das Synchronisationssignal nach Ablauf der Wartezeit ausgibt.

## Claims

1. Synchronization method for the temporal synchronization of at least two secondary units (120, 130; 220, 230) which are controlled by a main unit (110; 210), provision being made of two signal lines (105, 106; 205, 206) which respectively pass through each secondary unit (120, 130; 220, 230) exactly once in opposite orders, and the signal lines (105, 106; 205, 206) being configured in such a manner that a signal transmitted by the main unit (110; 210) on at least one of the signal lines (105, 106; 205, 206) passes through all secondary units and returns to the main unit, the synchronization method comprising the following steps of:

    determining the signal transit time required by a signal, which is transmitted by the main unit (110; 210), until its return, and
    notifying all secondary units (120, 130; 220, 230) of the signal transit time,
    transmitting at least one control signal from the main unit (110, 120) to all secondary units (120, 130; 220, 230) as a reference signal, so that each secondary unit receives the at least one control signal via both signal lines (105, 106; 205, 206),

**characterized in that**

each secondary unit (120, 130; 220, 230) carries out the following steps of:

    starting a first time counting operation when the at least one control signal is received via the first signal line (105; 205),
    starting a second time counting operation when the at least one control signal is received via the second signal line (106; 206),
    adding the two time counts,
    comparing the added time counts with the notified signal transit time,
    reading out the time counts as soon as the added time counts correspond to the notified signal transit time; and
    a time correction parameter being determined for each secondary unit (120, 130; 220, 230) with regard to each signal line (105, 106; 205, 206) on the basis of at least one counter reading which has been read out, and the secondary units (120, 130; 220, 230) carrying out the temporal synchronization taking into account the time correction parameters,

the main unit (110; 210) transmitting a control signal, which is used as a triggering signal for generating synchronization signals, to the secondary units (120, 130; 220, 230), and

the time correction parameter assigned to one of the signal lines by the secondary unit corresponding to a waiting time, and the secondary unit outputting the synchronization signal after the waiting time has elapsed once the triggering signal has been received via this signal line.

2. Synchronization method according to Claim 1, each secondary unit (120, 130; 220, 230) determining a respective time correction parameter for each signal line (105, 106; 205, 206).

3. Synchronization method according to either of Claims 1 and 2, the main unit (110, 210) transmitting a control signal to the secondary units (120, 130; 220, 230), and, after the control signal has been received on a signal line (105; 205), the secondary units waiting for a period of time which corresponds to the time correction parameter assigned to this signal line (105; 205) in order to specify an identical point in time for all secondary units.

4. Synchronization method according to one of Claims 1 to 3, the two signal lines (205, 206) being configured in such a manner that the secondary units (220, 230, 240) are serially connected to one another starting from the main unit (210), and that secondary unit (240) which is the last secondary unit from the point of view of the main unit transmits signals from one signal line (205) to the other signal line (206).

5. Synchronization method according to one of Claims 1 to 3, the two signal lines (105, 106) forming two respective circular signal paths which start from the main unit (110) and return to the latter.

6. Synchronization method according to Claim 5, the main unit (110) determining the signal transit time for each of the circular signal paths.

7. Synchronization method according to Claim 5 or 6, the main unit (110) transmitting a respective control signal on both signal paths at the same time.

8. Synchronization method according to one of Claims 5 to 7, the signal transit times of the circular signal paths (105, 106) respectively being the same.

9. Synchronization method according to Claim 4, the signal transit time from the main unit (210) to the last secondary unit (240) on one signal line (205) corresponding to the signal transit time from the last secondary unit (240) to the main unit (210) on the other signal line (206).

10. Synchronization method according to one of Claims 1 to 9, the time correction parameter determined by the secondary unit (120; 220) for a signal line (105; 205) being a measure of the signal transit time from the main unit (110; 210) to this secondary unit (120; 220) on the other signal line (106; 206).

11. Synchronization method according to one of Claims 1 to 10, the secondary units (120, 130, 140; 220, 230, 240) each storing the read-out time count of the first time counting operation as a time correction parameter for the first signal line (105; 205) and storing the read-out time count of the second time counting operation as a time correction parameter for the second signal line (106; 206).

12. Synchronization method according to one of Claims 2 to 11, the synchronization signals being output at the same time as the return of the triggering signal to the main unit (110; 210).

13. Synchronization method according to one of Claims 5 to 7, the signal transit times of the circular signal paths (605, 606) being different.

14. Synchronization method according to Claim 13, the synchronization signals being output at the same time as the return of the triggering signal which requires the longer signal transit time in order to return to the main unit.

15. Synchronization method according to one of Claims 1 to 14, the main unit (110; 210) notifying a signal transit time which is longer than the signal transit time determined.

16. Synchronization method according to Claim 15, the notified signal transit time corresponding to a signal transit time which is obtained by additionally inserting a predefined number of secondary units into the signal paths.

17. Synchronization method according to one of Claims 1 to 16, the steps of adding the time counts and comparing the added time counts with the notified signal transit time respectively being carried out continuously.

18. Control system (100) for the temporal synchronization of at least two secondary units (120, 130; 220, 230), said system having the at least two secondary units (120, 130; 220, 230) and a main unit (110; 210) for controlling the at least two secondary units (120, 130; 220, 230) and having two signal lines (105, 106; 205, 206) which respectively pass through each secondary unit (120, 130; 220, 230) exactly once in opposite orders, the signal lines (105, 106; 205, 206) being configured in such a manner that a signal transmitted by the main unit (110; 210) on at least one of the signal lines (105, 106; 205, 206) passes through all secondary units (120, 130; 220, 230) and returns to the main unit (110; 210), and the main unit (110; 210) having:

a time measuring device for determining the signal transit time required by a signal, which is transmitted by the main unit (110; 210), until its return, and
a communication device for notifying all secondary units (120, 130; 220, 230) of the signal transit time;
the communication device also being designed to transmit at least one control signal from the main unit (110; 210) to all secondary units (120, 130; 220, 230) as a reference signal, so that each secondary unit (120, 130; 220, 230) receives the at least one control signal via both signal lines,
**characterized in that**
each secondary unit (120, 130; 220, 230) has:

a first time counter (430) which counts a first period of time since the at least one control signal was received via the first signal line (105; 205),
a second time counter (420) which counts a second period of time since the at least one control signal was received via the second signal line (106; 206),
a control device having an adding device (440) for adding the two time counter readings, a comparison device (450) for comparing the added time counter readings with the notified signal transit time, and a device for reading out the time counter readings as soon as the added time counter readings correspond to the notified signal transit time; and
a time correction parameter being determined for each secondary unit (120, 130; 220, 230) with regard to each signal line (105, 106; 205, 206) on the basis of at least one time counter reading which has been read out, and
the secondary units (120, 130; 220, 230) being designed to carry out the temporal synchronization taking into account the time correction parameters, and
the communication device of the main unit (110; 210) being designed to transmit a control signal, which is used as a triggering signal for generating synchronization signals, to the secondary units (120, 130; 220, 230), and
the time correction parameter assigned to one of the signal lines (105; 205) by the secondary unit corresponding to a waiting time, and the secondary unit (120; 220) outputting the synchronization signal after the waiting time has elapsed once the triggering signal has been received via this signal line (105; 205).

19. Control system according to Claim 18, the control device in each secondary unit (120, 130; 220, 230) being designed to determine a respective time correction parameter for each signal line (105, 106; 205, 206).

20. Control system according to either of Claims 18 and 19, the main unit (110, 210) transmitting a control signal to the secondary units (120, 130; 220, 230), and, after the control signal has been received on a signal line (105; 205), the secondary units waiting for a period of time which corresponds to the time correction parameter assigned to this signal line (105; 205) in order to specify an identical point in time for all secondary units.

21. Control system according to one of Claims 18 to 20, the two signal lines (205, 206) being configured in such a manner that the secondary units (220, 230, 240) are serially connected to one another starting from the main unit (210), and that secondary unit (240) which is the last secondary unit from the point of view of the main unit (210) transmits signals from one signal line (205) to the other signal line (206).

22. Control system according to one of Claims 18 to 20, the two signal lines (105, 106) forming two respective circular signal paths which start from the main unit (110) and return to the latter.

**23.** Control system according to Claim 22, the time measuring device being designed to determine the signal transit time for each of the circular signal paths (105, 106).

**24.** Control system according to Claim 22 or 23, the communication device transmitting a respective control signal on both signal paths (105, 106) at the same time.

**25.** Control system according to one of Claims 22 to 24, the signal transit times of the circular signal paths (105, 106) respectively being the same.

**26.** Control system according to Claim 21, the signal transit time from the main unit (210) to the last secondary unit (240) on one signal line (205) corresponding to the signal transit time from the last secondary unit (240) to the main unit (210) on the other signal line (206).

**27.** Control system according to one of Claims 18 to 26, the time correction parameter determined by the secondary unit (120, 130, 140; 220, 230, 240) for a signal line (105; 205) being a measure of the signal transit time from the main unit (110; 210) to this secondary unit (120, 130, 140; 220, 230, 240) on the other signal line (106; 206).

**28.** Control system according to one of Claims 18 to 27, the secondary units (120, 130, 140; 220, 230, 240) each having a memory for storing the read-out time counter reading of the first time counter (430) as a time correction parameter for the first signal line (105; 205) and for storing the read-out time counter reading of the second time counter (420) as a time correction parameter for the second signal line (106; 206).

**29.** Control system according to one of Claims 18 to 28, a point in time which is identical for all secondary units (120, 130; 220, 230) being specified at the same time as the return of the control signal to the main unit (110; 210).

**30.** Control system according to one of Claims 22 to 24, the signal transit times of the circular signal paths (605, 606) being different.

**31.** Control system according to Claim 30, a point in time which is identical for all secondary units (120, 130; 220, 230) being specified at the same time as the return of the control signal which requires the longer signal transit time in order to return to the main unit.

**32.** Control system according to one of Claims 18 to 31, the main unit (110; 210) notifying a signal transit time which is longer than the signal transit time determined.

**33.** Control system according to Claim 32, the notified signal transit time corresponding to a signal transit time which is obtained by additionally inserting a predefined number of secondary units into the signal paths.

**34.** Control system according to one of Claims 18 to 33, the adding device (440) continuously adding the time counter readings and the comparison device (450) continuously comparing the added time counter readings with the notified signal transit time.

**35.** Time-synchronizable secondary unit of a control system (100; 200; 500; 600), the secondary unit being controlled by a main unit (110; 210), and two signal lines (105, 106; 205, 206) passing through the secondary unit, the secondary unit receiving a signal transit time notified by the main unit (110; 210) and also receiving a reference signal via the two signal lines (105, 106; 205, 206), the main unit transmitting said reference signal to the secondary unit in the form of at least one control signal,
**characterized by**

a first time counter (430) which counts a first period of time since the reference signal was received via the first signal line (105; 205),
a second time counter (420) which counts a second period of time since the reference signal was received via the second signal line (106; 206),
a control device having an adding device (440) for adding the two time counter readings, a comparison device (450) for comparing the added time counter readings with the notified signal transit time, and a device for reading out the time counter readings as soon as the added time counter readings correspond to the notified signal transit time, and
a time correction parameter being determined for the secondary unit with regard to each signal line (105, 106;

205, 206) on the basis of at least one time counter reading which has been read out,
the secondary unit being designed to carry out the temporal synchronization taking into account the time correction parameters, and
the secondary unit being designed to receive a control signal, which is used as a triggering signal for generating synchronization signals, from the main unit (110; 210), and
the time correction parameter assigned to a signal line (105; 205) by the secondary unit corresponding to a waiting time, and the secondary unit outputting the synchronization signal (125) after the waiting time has elapsed once the triggering signal has been received via this signal line (105; 205).

36. Secondary unit according to Claim 35, the control device being designed to determine a respective time correction parameter for each signal line (105, 106; 205, 206).

37. Secondary unit according to either of Claims 35 and 36, the secondary unit receiving a control signal from the main unit (110; 210) on a signal line (105; 205) and then waiting for a period of time which corresponds to the time correction parameter assigned to this signal line (105; 205) in order to thus specify a reference point in time.

38. Secondary unit according to one of Claims 35 to 37, the time correction parameter determined by the secondary unit for a signal line (105; 205) being set as a measure of the signal transit time from the main unit to the secondary unit on the other signal line (106; 206).

39. Secondary unit according to one of Claims 35 to 38, the secondary unit having a memory for storing the read-out time counter reading of the first time counter (430) as a time correction parameter for the first signal line (105; 205) and for storing the read-out time counter reading of the second time counter (420) as a time correction parameter for the second signal line (106; 206).

40. Secondary unit according to one of Claims 35 to 39, the adding device (440) continuously adding the time counter readings and the comparison device (450) continuously comparing the added time counter readings with the notified signal transit time.

41. Synchronization method for the temporal synchronization of at least two secondary units (120, 130; 220, 230) which are controlled by a main unit (110; 210), provision being made of two signal lines (105, 106; 205, 206) which respectively pass through each secondary unit (120, 130; 220, 230) exactly once in opposite orders, and the signal lines (105, 106; 205, 206) being configured in such a manner that a signal transmitted by the main unit (110; 210) on at least one of the signal lines (105, 106; 205, 206) passes through all secondary units and returns to the main unit, the synchronization method comprising the following steps of:

determining the signal transit time required by a signal, which is transmitted by the main unit (110; 210), until its return, and
notifying all secondary units (120, 130; 220, 230) of the signal transit time,
transmitting at least one control signal from the main unit (110, 120) to all secondary units (120, 130; 220, 230) as a reference signal, so that each secondary unit receives the at least one control signal via both signal lines (105, 106; 205, 206),

**characterized in that**

each secondary unit (120, 130; 220, 230) carries out the following steps of:

starting a first time counting operation when the at least one control signal is received via the first signal line (105; 205),
starting a second time counting operation when the at least one control signal is received via the second signal line (106; 206),
adding the two time counts,
comparing the added time counts with the notified signal transit time,
determining the point in time at which the added time counts correspond to the notified signal transit time; and
the secondary units (120, 130; 220, 230) being synchronized on the basis of the point in time determined,
the main unit (110; 210) transmitting a control signal, which is used as a triggering signal for generating synchronization signals, to the secondary units (120, 130; 220, 230), and
the time correction parameter assigned to one of the signal lines by the secondary unit corresponding to a waiting time, and the secondary unit outputting the synchronization signal after the waiting time has elapsed once the triggering signal has been received via this signal line.

**Revendications**

1. Procédé de synchronisation pour la synchronisation en fonction du temps d'au moins deux unités secondaires (120, 130 ; 220, 230) commandées par une unité principale (110 ; 210), selon lequel deux lignes de signaux (105, 106 ; 205, 206) traversent précisément une fois respectivement chaque unité secondaire (120, 130 ; 220, 230) dans l'ordre opposé l'une de l'autre, et les lignes de signaux (105, 106 ; 205, 206) sont configurées de telle sorte qu'un signal émis par l'unité principale (110 ; 210) traverse toutes les unités secondaires sur au moins une des lignes de signaux (105, 106 ; 205, 206) et retourne vers l'unité principale, le procédé de synchronisation comprenant les étapes suivantes :

   détermination du temps de passage de signal nécessaire pour un signal émis par l'unité principale (110 ; 210) jusqu'au retour, et
   communication du temps de passage de signal à toutes les unités secondaires (120, 130 ; 220, 230),
   émission d'au moins un signal de commande par l'unité principale (110, 120) à toutes les unités secondaires (120, 130 ; 220, 230) en forme de signal de référence de telle sorte que chaque unité secondaire reçoive au moins un signal de commande par les deux lignes de signaux (105, 106 ; 205, 206),

   **caractérisé en ce que**
   chaque unité secondaire (120, 130 ; 220, 230) exécute les étapes suivantes :

   - démarrage d'un premier comptage de temps lors de la réception d'au moins un signal de commande par la première ligne de signaux (105 ; 205),
   - démarrage d'un deuxième comptage de temps lors de la réception d'au moins un signal de commande par la deuxième ligne de signaux (106 ; 206),
   - addition des deux états de comptage de temps,
   - comparaison des états de comptage de temps additionnés avec le temps de passage de signal communiqué,
   - lecture des états de comptage de temps dès que les états de comptage de temps correspondent au temps de passage de signal communiqué ; et
   un paramètre de correction de temps pour chaque unité secondaire (120, 130 ; 220, 230) concernant chaque ligne de signaux (105, 106 ; 205, 206) est déterminé sur la base d'au moins un état de comptage lu, et
   les unités secondaires (120, 130 ; 220, 230) exécutent la synchronisation en fonction du temps en tenant compte des paramètres de correction de temps, l'unité principale (110; 210) envoyant aux unités secondaires (120, 130 ; 220, 230) un signal de commande servant de signal de déclenchement de signaux de synchronisation, et le paramètre de correction de temps associé par l'unité secondaire à l'une des lignes de signaux correspond à un temps d'attente, et à la réception du signal de déclenchement par cette ligne de signaux l'unité secondaire émet le signal de synchronisation au terme de ce temps d'attente.

2. Procédé de synchronisation selon la revendication 1, selon lequel chaque unité secondaire (120, 130 ; 220, 230) détermine respectivement un paramètre de correction de temps concernant chaque ligne de signaux (105, 106 ; 205, 206).

3. Procédé de synchronisation selon l'une des revendications 1 à 2, selon lequel l'unité principale (110, 210) envoie aux unités secondaires (120, 130 ; 220, 230) un signal de commande, et après la réception du signal de commande sur une ligne de signaux (105 ; 205) les unités secondaires attendent un certain temps qui correspond au paramètre de correction de temps associé à cette ligne de signaux (105 ; 205) afin d'indiquer à toutes les unités secondaires un instant identique.

4. Procédé de synchronisation selon l'une des revendications 1 à 3, selon lequel les deux lignes de signaux (205, 206) sont configurées pour relier en série les unités secondaires (220, 230, 240) depuis l'unité principale (210), et la dernière unité secondaire (240) vue depuis l'unité principale transmet des signaux d'une ligne de signaux (205) dans l'autre ligne de signaux (206).

5. Procédé de synchronisation selon l'une des revendications 1 à 3, selon lequel les deux lignes de signaux (105, 106) forment respectivement deux chemins de signaux annulaires partant de l'unité principale (110) et retournant vers celle-ci.

6. Procédé de synchronisation selon la revendication 5, selon lequel l'unité principale (110) détermine le temps de passage de signal pour chacun des chemins de signaux annulaires.

7. Procédé de synchronisation selon la revendication 5 ou 6, selon lequel l'unité principale (110) envoie respectivement un signal de commande simultanément aux deux chemins de signaux.

8. Procédé de synchronisation selon l'une des revendications 5 à 7, selon lequel le temps de passage de signal des chemins de signaux annulaires (105, 106) est chaque fois identique.

9. Procédé de synchronisation selon la revendication 4, selon lequel la durée de parcours de signal depuis l'unité principale (210) jusqu'à la dernière unité secondaire (240) sur une des lignes de signaux (205) correspond à la durée de parcours de signal depuis la dernière unité secondaire (240) jusqu'à l'unité principale (210) sur l'autre ligne de signaux (206).

10. Procédé de synchronisation selon l'une des revendications 1 à 9, selon lequel un paramètre de correction de temps déterminé par l'unité secondaire (120 ; 220) pour une ligne de signaux (105 ; 205) est une grandeur pour la durée de parcours de signal depuis l'unité principale (110 ; 210) jusqu'à cette unité secondaire (120 ; 220) sur l'autre ligne de signaux (106 ; 206).

11. Procédé de synchronisation selon l'une des revendications 1 à 10, selon lequel les unités secondaires (120, 130, 140 ; 220, 230, 240) mémorisent chacune l'état de comptage de temps lu du premier comptage de temps en forme de paramètre de correction de temps pour la première ligne de signaux (105 ; 205) et l'état de comptage de temps lu du deuxième comptage de temps en forme de paramètre de correction de temps pour la deuxième ligne de signaux (106 ; 206).

12. Procédé de synchronisation selon l'une des revendications 2 à 11, selon lequel l'émission des signaux de synchronisation s'effectue en même tems que le retour du signal de déclenchement dans l'unité principale (110 ; 210).

13. Procédé de synchronisation selon l'une des revendications 5 à 7, selon lequel le temps de passage de signal des chemins de signaux annulaires (605, 606) est différent.

14. Procédé de synchronisation selon la revendication 13, selon lequel l'émission des signaux de synchronisation s'effectue en même temps que le retour du signal de déclenchement qui nécessite le plus long temps de passage de signal pour le retour vers l'unité principale.

15. Procédé de synchronisation selon l'une des revendications 1 à 14, selon lequel l'unité principale (110; 210) communique un temps de passage de signal qui est plus grand que le temps de passage de signal détecté.

16. Procédé de synchronisation selon la revendication 15, selon lequel le temps de passage de signal communiqué correspond à un temps de passage de signal qui résulte de l'insertion supplémentaire d'un nombre prédéfini d'unités secondaires dans les chemins de signaux.

17. Procédé de synchronisation selon l'une des revendications 1 à 16, selon lequel on exécute en continu les étapes d'addition des états de comptage de temps, et de comparaison des états de comptage de temps additionnés avec le temps de passage de signal communiqué.

18. Système de commande (100) pour la synchronisation en fonction du temps d'au moins deux unités secondaires (120, 130 ; 220, 230), qui présente au moins deux unités secondaires (120, 130 ; 220, 230) et une unité principale (110 ; 210) pour commander au moins deux unités secondaires (120, 130 ; 220, 230), et avec deux lignes de signaux (105, 106 ; 205, 206) qui traversent précisément une fois respectivement chaque unité secondaire (120, 130 ; 220, 230) dans l'ordre opposé l'une de l'autre, et les lignes de signaux (105, 106 ; 205, 206) sont configurées de telle sorte qu'un signal émis par l'unité principale (110; 210) traverse toutes les unités secondaires (120, 130 ; 220, 230) sur au moins une des lignes de signaux (105, 106 ; 205, 206) et retourne vers l'unité principale, et l'unité principale (110 ; 210) présente :

un dispositif de chronomètre pour déterminer le temps de passage de signal dont un signal émis par l'unité principale (110 ; 210) a besoin jusqu'au retour, et

un dispositif de communication pour communiquer le temps de passage de signal à toutes les unités secondaire (120, 130 ; 220, 230) ;

le dispositif de communication étant en outre prévu pour envoyer au moins un signal de commande de l'unité principale (110 ; 210) à toutes les unités secondaires (120, 130 ; 220, 230) en forme de signal de référence, de sorte que chaque unité secondaire (120, 130 ; 220, 230) reçoive au moins un signal de commande par les deux lignes de signaux,

**caractérisé en ce que**

chaque unité secondaire (120, 130 ; 220, 230) présente :

- un premier compteur horaire (430) qui compte un premier temps depuis la réception d'au moins un signal de commande par la première ligne de signaux (105 ; 205),
- un deuxième compteur horaire (420) qui compte un deuxième temps depuis la réception d'au moins un signal de commande par la deuxième ligne de signaux (106 ; 206),
- un dispositif de commande avec un additionneur (440) pour additionner les deux états de compteur horaire, un comparateur (450) pour comparer les états de compteur horaire additionnés avec le temps de passage de signal communiqué, et
- un dispositif de lecture des états de compteur horaire dès que les états de compteur horaire additionnés correspondent au temps de passage de signal communiqué ; et

un paramètre de correction de temps est déterminé pour chaque unité secondaire (120, 130 ; 220, 230) concernant chaque ligne de signaux (105, 106 ; 205, 206) sur la base d'au moins un état de compteur horaire lu, les unités secondaires (120, 130 ; 220, 230) sont prévues pour exécuter la synchronisation en fonction du temps en tenant compte des paramètres de correction de temps,

le dispositif de communication du l'unité principale (110 ; 210) est prévu pour envoyer aux unités secondaires (120, 130 ; 220, 230) un signal de commande servant de signal de déclenchement pour générer des signaux de synchronisation, et

le paramètre de correction de temps associé par l'unité secondaire à l'une des lignes de signaux (105 ; 205) correspond à un temps d'attente, et à la réception du signal de déclenchement par cette ligne de signaux (105 ; 205) l'unité secondaire (120 ; 220) émet le signal de synchronisation au terme du temps d'attente.

19. Système de commande selon la revendication 18, dans lequel dans chaque unité secondaire (120, 130 ; 220, 230) le dispositif de commande est prévu pour déterminer respectivement un paramètre de correction de temps concernant chaque ligne de signaux (105, 106 ; 205, 206).

20. Système de commande selon l'une des revendications 18 à 19, dans lequel l'unité principale (110, 210) envoie aux unités secondaires (120, 130 ; 220, 230) un signal de commande, et après la réception du signal de commande sur une ligne de signaux (105 ; 205) les unités secondaires attendent un certain temps qui correspond au paramètre de correction de temps associé à cette ligne de signaux (105 ; 205) afin d'indiquer à toutes les unités secondaires un instant identique.

21. Système de commande selon l'une des revendications 18 à 20, dans lequel les deux lignes de signaux (205, 206) sont configurées pour relier en série les unités secondaires (220, 230, 240) depuis l'unité principale (210), et la dernière unité secondaire (240) vue depuis l'unité principale (210) transmet des signaux d'une ligne de signaux (205) dans l'autre ligne de signaux (206).

22. Système de commande selon l'une des revendications 18 à 20, dans lequel les deux lignes de signaux (105, 106) forment respectivement deux chemins de signaux annulaires partant de l'unité principale (110) et retournant vers celle-ci.

23. Système de commande selon la revendication 22, dans lequel le compteur horaire est prévu pour déterminer le temps de passage de signal pour chacun des chemins de signaux annulaires (105, 106).

24. Système de commande selon la revendication 22 ou 23, dans lequel le dispositif de communication envoie respectivement un signal de commande simultanément aux deux chemins de signaux (105, 106).

25. Système de commande selon l'une des revendications 22 à 24, dans lequel le temps de passage de signal des chemins de signaux annulaires (105, 106) est respectivement identique.

**26.** Système de commande selon la revendication 21, dans lequel la durée de parcours de signal depuis l'unité principale (210) jusqu'à la dernière unité secondaire (240) sur une des lignes de signaux (205) correspond à la durée de parcours de signal depuis la dernière unité secondaire (240) jusqu'à l'unité principale (210) sur l'autre ligne de signaux (206).

**27.** Système de commande selon l'une des revendications 18 à 26, dans lequel un paramètre de correction de temps déterminé par l'unité secondaire (120, 130, 140 ; 220, 230, 240) pour une ligne de signaux (105 ; 205) est une grandeur pour la durée de parcours de signal depuis l'unité principale (110 ; 210) jusqu'à cette unité secondaire (120, 130, 140 ; 220, 230, 240) sur l'autre ligne de signaux (106 ; 206).

**28.** Système de commande selon l'une des revendications 18 à 27, dans lequel les unités secondaires (120, 130, 140 ; 220, 230, 240) présentent respectivement une mémoire pour mémoriser l'état de comptage de temps lu du premier compteur horaire (430) en forme de paramètre de correction de temps pour la première ligne de signaux (105 ; 205) et l'état de comptage de temps lu du deuxième compteur horaire (420) en forme de paramètre de correction de temps pour la deuxième ligne de signaux (106 ; 206).

**29.** Système de commande selon l'une des revendications 18 à 28, dans lequel l'indication d'un instant identique pour toutes les unités secondaires (120, 130 ; 220, 230) s'effectue en même tems que le retour du signal de commande dans l'unité principale (110 ; 210).

**30.** Système de commande selon l'une des revendications 22 à 24, dans lequel le temps de passage de signal des chemins de signaux annulaires (605, 606) est différent.

**31.** Système de commande selon la revendication 30, dans lequel l'indication d'un instant identique pour toutes les unités secondaires (120, 130 ; 220, 230) s'effectue en même temps que le retour du signal de commande qui nécessite le plus long temps de passage de signal pour le retour vers l'unité principale.

**32.** Système de commande selon l'une des revendications 18 à 31, dans lequel l'unité principale (110; 210) communique un temps de passage de signal plus grand que le temps de passage de signal détecté.

**33.** Système de commande selon la revendication 32, dans lequel le temps de passage de signal communiqué correspond à un temps de passage de signal qui résulte de l'insertion supplémentaire d'un nombre prédéfini d'unités secondaires dans les chemins de signaux.

**34.** Système de commande selon l'une des revendications 18 à 33, dans lequel l'additionneur (44) additionne continuellement les états de comptage de temps, et le comparateur (450) compare continuellement les états de comptage de temps additionnés avec le temps de passage de signal communiqué.

**35.** Unité secondaire synchronisée en fonction du temps d'un système de commande (100 ; 200 ; 500 ; 600), l'unité secondaire étant commandée par une unité principale (110, 210), et deux lignes de signaux (105, 106 ; 205, 206) traversant l'unité secondaire, l'unité secondaire recevant un temps de passage de signal communiqué par l'unité principale (110 ; 210) et recevant en outre par les deux lignes de signaux (105, 106 ; 205, 206) un signal de référence que l'unité principale envoie à l'unité secondaire en forme d'au moins un signal de commande,
**caractérisée en ce qu'**

un premier compteur horaire (430) compte un premier temps depuis la réception du signal de référence par la première ligne de signaux (105 ; 205),
un deuxième compteur horaire (420) compte un deuxième temps depuis la réception du signal de référence par la deuxième ligne de signaux (205 ; 206),
un dispositif de commande comporte un additionneur (440) pour additionner les deux états de compteur horaire,
un comparateur (450) pour comparer les états de compteur horaire additionnés avec le temps de passage de signal communiqué, et un dispositif de lecture des états de compteur horaire dès que les états de compteur horaire additionnés correspondent au temps de passage de signal communiqué, et
un paramètre de correction de temps est déterminé concernant chaque ligne de signaux (105, 106 ; 205, 206) pour l'unité secondaire sur la base d'au moins un état de compteur horaire lu,
l'unité secondaire est prévue pour exécuter la synchronisation en fonction du temps en tenant compte des paramètres de correction de temps, et l'unité secondaire étant prévue pour recevoir de l'unité principale (110 ; 210) un signal de commande servant de signal de déclenchement pour générer des signaux de synchronisation, et

le paramètre de correction de temps associé par l'unité secondaire à l'une des lignes de signaux (105 ; 205) correspond à un temps d'attente, et à la réception du signal de déclenchement par cette ligne de signaux (105 ; 205) l'unité secondaire (120 ; 220) émet le signal de synchronisation (125) au terme du temps d'attente.

36. Unité secondaire selon la revendication 35, le dispositif de commande étant prévu pour déterminer respectivement un paramètre de correction de temps concernant chaque ligne de signaux (105, 106 ; 205, 206).

37. Unité secondaire selon l'une des revendication 35 à 36, l'unité secondaire recevant de l'unité principale (110 ; 210) un signal de commande sur une ligne de signaux (105 ; 205) puis attendant un certain temps, qui correspond au paramètre de correction de temps associé à cette ligne de signaux (105 ; 205), pour ainsi indiquer un instant de référence.

38. Unité secondaire selon l'une des revendications 35 à 37, l'unité secondaire plaçant des paramètres de correction de temps déterminés pour une ligne de signaux (105 ; 205) comme grandeur pour la durée de parcours de signal depuis l'unité principale jusqu'à l'unité secondaire sur l'autre ligne de signaux (106 ; 206).

39. Unité secondaire selon l'une des revendications 35 à 38, l'unité secondaire présentant une mémoire pour mémoriser l'état de comptage de temps lu du premier compteur horaire (430) en forme de paramètre de correction de temps pour la première ligne de signaux (105 ; 205) et l'état de comptage de temps lu du deuxième compteur horaire (420) en forme de paramètre de correction de temps pour la deuxième ligne de signaux (106 ; 206).

40. Unité secondaire selon l'une des revendications 35 à 39, l'additionneur (44) additionnant continuellement les états de comptage de temps et le comparateur (450) comparant continuellement les états de comptage de temps additionnés avec le temps de passage de signal communiqué.

41. Procédé de synchronisation pour la synchronisation en fonction du temps d'au moins deux unités secondaires (120, 130 ; 220, 230) commandées par une unité principale (110 ; 210), dans lequel deux lignes de signaux (105, 106 ; 205, 206) sont prévues qui traversent précisément une fois respectivement chaque unité secondaire (120, 130 ; 220, 230) dans l'ordre opposé l'une à l'autre, et les lignes de signaux (105, 106 ; 205, 206) sont configurées de telle sorte qu'un signal émis par l'unité principale (110 ; 210) traverse toutes les unités secondaires sur au moins une des lignes de signaux (105, 106 ; 205, 206) et retourne vers l'unité principale, le procédé de synchronisation comprenant les étapes suivantes :

   détermination du temps de passage de signal nécessaire pour un signal émis par l'unité principale (110 ; 210) jusqu'au retour, et
   communication du temps de passage de signal à toutes les unités secondaires (120, 130 ; 220, 230) ;
   émission d'au moins un signal de commande par l'unité principale (110, 120) à toutes les unités secondaires (120, 130 ; 220, 230) en forme de signal de référence de telle sorte que chaque unité secondaire reçoive au moins un signal de commande par les deux lignes de signaux (105, 106 ; 205, 206),

   **caractérisé en ce que**
   chaque unité secondaire (120, 130; 220, 230) exécute les étapes suivantes :

   - démarrage d'un premier comptage de temps lors de la réception d'au moins un signal de commande par la première ligne de signaux (105 ; 205),
   - démarrage d'un deuxième comptage de temps lors de la réception d'au moins un signal de commande par la deuxième ligne de signaux (106 ; 206),
   - addition des deux états de comptage de temps,
   - comparaison des états de comptage de temps additionnés avec le temps de passage de signal communiqué,
   - détermination de l'instant auquel les états de comptage de temps correspondent au temps de passage de signal communiqué ; et
   les unités secondaires (120, 130 ; 220, 230) se synchronisent sur la base de l'instant déterminé,
   l'unité principale (110; 210) envoyant aux unités secondaires (120, 130 ; 220, 230) un signal de commande servant de signal de déclenchement de signaux de synchronisation, et
   le paramètre de correction de temps associé par l'unité secondaire à l'une des lignes de signaux correspond à un temps d'attente, et à la réception du signal de déclenchement par cette ligne de signaux l'unité secondaire émet le signal de synchronisation au terme de ce temps d'attente.

FIG. 1

EP 1 659 718 B1

FIG. 2

110

111

112

105 →

105

106 →

→ 106

300

113

114

## FIG. 3A

210

211

320

→ 205

206

212

## FIG. 3 B

FIG.4

EP 1 659 718 B1

FIG.5A

FIG.5B

EP 1 659 718 B1

**IN DER BESCHREIBUNG AUFGEFÜHRTE DOKUMENTE**

**In der Beschreibung aufgeführte Patentdokumente**

- DE 19917354 A
- US 20020110155 A